(19) Europäisches Patentamt / European Patent Office / Office européen des brevets

(11) **EP 3 457 690 A1**

(12) **EUROPEAN PATENT APPLICATION**
published in accordance with Art. 153(4) EPC

(43) Date of publication:
**20.03.2019 Bulletin 2019/12**

(51) Int Cl.:
*H04N 19/117* (2014.01)          *H04N 19/14* (2014.01)
*H04N 19/176* (2014.01)          *H04N 19/196* (2014.01)
*H04N 19/423* (2014.01)          *H04N 19/70* (2014.01)
*H04N 19/82* (2014.01)

(21) Application number: **17795893.1**

(22) Date of filing: **17.04.2017**

(86) International application number:
**PCT/JP2017/015414**

(87) International publication number:
**WO 2017/195532 (16.11.2017 Gazette 2017/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.05.2016 JP 2016097457**

(71) Applicant: **Sharp Kabushiki Kaisha
Sakai City, Osaka 590-8522 (JP)**

(72) Inventors:
• **YAMAMOTO, Yoshiya
Sakai City, Osaka 590-8522 (JP)**
• **IKAI, Tomohiro
Sakai City, Osaka 590-8522 (JP)**

(74) Representative: **Müller Hoffmann & Partner
Patentanwälte mbB
St.-Martin-Strasse 58
81541 München (DE)**

(54) **IMAGE DECODING DEVICE AND IMAGE ENCODING DEVICE**

(57)    It is an object to provide an image decoding device and an image encoding device that can achieve high coding efficiency with a low throughput. An image decoding device (31) includes a block parameter deriver (5211) configured to derive a block index by referring to a pixel value of an unfiltered decoded image in a target unit area, and a filter processor (525) configured to perform adaptive filter processing on the unfiltered decoded image in the target unit area, by using a filter coefficient in accordance with the block index.

FIG. 7

**Description**

Technical Field

The present disclosure relates to an image decoding device and an image encoding device.

Background Art

To efficiently transmit or record a video, a video encoding device for generating encoded data by encoding the video and a video decoding device for generating a decoded image by decoding the encoded data have been used.

Examples of specific video encoding schemes include a scheme proposed in H.265/HEVC (High-Efficiency Video Coding), for example.

In this video encoding scheme, images (pictures) making up a movie are managed in a hierarchical structure composed of slices obtained by dividing the images, coding units obtained by dividing the slices, prediction units (PU) and transform units (TU) that are blocks obtained by dividing the coding units, and the images are encoded/decoded on a block-by-block basis.

Also in this video encoding scheme, typically, a prediction image is generated on the basis of a local decoded image obtained by encoding/decoding an input image, and a prediction residual (also referred to as "differential image" or "residual image") obtained by subtracting the prediction image from the input image (original image) is encoded. Examples of methods for generating prediction images include inter-picture prediction (inter prediction) and intra-picture prediction (intra prediction).

In intra prediction, on the basis of local decoded images in the same picture, prediction images in the picture are sequentially generated. More specifically, in typical intra prediction, any of the prediction directions included in a predetermined prediction direction (prediction mode) group is selected for each prediction unit (block, for example), and a prediction pixel value of the prediction unit is generated by extrapolating a pixel value of a reference pixel in the local decoded images into the selected prediction direction. In inter prediction, motion compensation using a motion vector is applied to a reference picture (decoded image) that is entirely decoded, and thus a prediction image is generated for each prediction unit (block, for example).

Non Patent Literature 1 and Non Patent Literature 2 disclose adaptive loop filter (hereinafter, also simply referred to as "ALF") for categorizing each block unit of 4x4 pixels in decoded images into any of a plurality of groups in accordance with its direction and activity and filtering the decoded images using a filter coefficient set for each of the groups.

Non Patent Literature 3 discloses a method for deriving the direction of each block unit. In the method disclosed in Non Patent Literature 3, the direction and activity of each block unit are derived on the basis of the sum of pixel value variations in a horizontal direction, a vertical direction, and two diagonal directions of pixel groups of each block unit.

Citation List

Non Patent Literature

Non Patent Literature 1 :Video/JVET, "Algorithm Description of Joint Exploration TestModel 1 (JEM 1)", INTERNATIONAL ORGANIZATION FOR STANDARDIZATION ORGANISATION INTERNATIONALE DE NORMALISATION ISO/IEC JTC1/SC29/WG11 CODING OF MOVING PICTURES AND AUDIO, ISO/IEC JTC1/SC29/WG11/N15790, October 2015, Geneva, CH.
Non Patent Literature 2 :Video/JVET, "Algorithm Description of Joint Exploration TestModel 2", Joint Video Exploration Team (JVET) of ITU-T SG16 WP3 and ISO/IEC JTC1/SC29/WG11, February 2016, San Diego, USA.
Non Patent Literature 3 :Video/JVET, "Improvements on adaptive loop filter", Joint Video Exploration Team (JVET) of ITU-T SG16 WP3 and ISO/IEC JTC1/SC29/WG11, February 2016, San Diego, USA.

Summary of Invention

Technical Problem

In the techniques disclosed in Non Patent Literature 1 to Non Patent Literature 3, which categorizes each block unit into any of a plurality of groups in accordance with its direction and activity. However, some block units with the same direction and activity may require different optimum filter coefficients depending on objects included in these block units.

The method disclosed in Non Patent Literature 3 for deriving the direction of each block unit requires calculation of the sum of pixel value variations in the horizontal direction, vertical direction, and two diagonal directions of pixel groups of each block unit. Thus, the method requires a large amount of processing for deriving the direction for each block unit, and thus is cumbersome.

The present disclosure has been made in view of the above-described problems, and has an object of providing an image decoding device and an image encoding device that can achieve high coding efficiency with a low throughput by use of a more optimum filter coefficient for each block unit in decoded images.

Solution to Problem

To solve the above-described problems, an image decoding device according to one aspect of the present invention generates an unfiltered decoded image by referring to a residual image and a prediction image and generates a decoded image by applying an in-loop filter (hereinafter simply referred to as "ALF") to the unfiltered decoded image, and the device includes: a block index deriver configured to derive a block index by referring to a pixel value of the unfiltered decoded image in a target unit area; a filter index deriver configured to derive a filter index by referring to the block index; and a filter processor configured to apply the in-loop filter to the unfiltered decoded image in the target unit area, by using a filter coefficient determined in accordance with the filter index.

To solve the above-described problems, an image decoding device according to one aspect of the present invention generates an unfiltered decoded image by referring to a residual image and a prediction image and generates a decoded image by applying an ALF to the unfiltered decoded image, and the device includes: a category index determination unit configured to determine a category index for indicating a deriving method for a block index for each unit area; a block index deriver configured to derive the block index in accordance with the deriving method indicated by the category index; a filter index deriver configured to derive a filter index by referring to the block index; and a filter processor configured to apply the ALF to the unfiltered decoded image in a target unit area by using a filter coefficient determined in accordance with the filter index.

To solve the above-described problems, an image decoding device according to one aspect of the present invention generates an unfiltered decoded image by referring to a residual image and a prediction image and generates a decoded image by applying an ALF to the unfiltered decoded image, and the device includes: a category index deriver configured to derive a block index for each unit area; a filter index deriver configured to derive a filter index by referring to the category index; a filter processor configured to apply the ALF to the unfiltered decoded image in a target unit area by using a filter coefficient determined in accordance with the filter index; and a filter coefficient storage configured to store the filter coefficient in any of a plurality of buffers in accordance with the category index.

To solve the above-described problems, an image encoding device according to one aspect of the present invention generates an unfiltered decoded image by referring to a prediction image and a prediction residual and generates a decoded image by applying an ALF to the unfiltered decoded image, and the device includes: a block index deriver configured to derive a block index by referring to a pixel value of the unfiltered decoded image in a target unit area; a filter index deriver configured to derive a filter index by referring to the block index; and a filter processor configured to apply the ALF to the unfiltered decoded image in the target unit area by using a filter coefficient determined in accordance with the filter index.

To solve the above-described problems, an image encoding device according to one aspect of the present invention generates an unfiltered decoded image by referring to a prediction image and a prediction residual and generates a decoded image by applying an ALF to the unfiltered decoded image, and the device includes: a category index determination unit configured to determine a category index for indicating a deriving method for a block index for each unit area; a block index deriver configured to derive the block index in accordance with the deriving method indicated by the category index; a filter index deriver configured to derive a filter index by referring to the block index; and a filter processor that applies the ALF to the unfiltered decoded image in a target unit area by using a filter coefficient determined in accordance with the filter index.

To solve the above-described problems, an image encoding device according to one aspect of the present invention generates an unfiltered decoded image by referring to a prediction image and a prediction residual and generates a decoded image by applying an ALF to the unfiltered decoded image, and the device includes: a category index deriver configured to derive a category index for each unit area; a filter index deriver configured to derive a filter index by referring to the category index; a filter processor configured to apply the ALF to the unfiltered decoded image in a target unit area by using a filter coefficient determined in accordance with the filter index; and a filter coefficient storage configured to store the filter coefficient in any of a plurality of buffers in accordance with the category index.

Advantageous Effects of Invention

One aspect of the present invention can achieve high coding efficiency with a low throughput by use of a more optimum filter coefficient for each block unit in decoded images.

Brief Description of Drawings

FIG. 1 is a schematic view illustrating a configuration of an image transmission system according to one embodiment of the present invention.
FIGS. 2A to 2F are diagrams illustrating a hierarchical structure of data of a coding stream according to the embodiment of the present invention.
FIGS. 3A to 3H are diagrams illustrating a pattern of a PU division mode. FIGS. 3A to 3H illustrate partition shapes when the PU division mode is 2N x 2N, 2N x N, 2N x nU, 2N x nD, N x 2N, nL x 2N, nR x 2N, and N x N, respectively.
FIG. 4 is a conceptual diagram illustrating an example of a list of reference pictures.
FIG. 5 is a conceptual diagram illustrating an example of the reference pictures.
FIG. 6 is a schematic view illustrating a configuration of an image decoding device according to the embodiment of the present invention.
FIG. 7 is a block diagram illustrating a configuration of an ALF included in an image decoding device according to the embodiment of the present invention.
FIG. 8 is a diagram illustrating pixels included in a filter reference area R and corresponding filter coefficients.
FIG. 9 is a flowchart of processing from the deriving of a block index to generation of an ALF-filtered decoded image according to the embodiment of the present invention.
FIG. 10 is a schematic view of upper left, upper right, lower left, and lower right pixels in a target unit area.
FIG. 11 is a schematic view of upper left, upper right, lower left, and lower right pixels in another target unit area different from the one illustrated in FIG. 10.
FIG. 12 is a schematic view illustrating a configuration of an image encoding device according to the embodiment of the present invention.
FIG. 13 is a block diagram illustrating a configuration of an ALF included in an image encoding device according to the embodiment of the present invention.
FIG. 14 is a block diagram illustrating a configuration of an ALF included in an image decoding device according to another embodiment of the present invention.
FIG. 15 is a flowchart of processing from the deriving of a category index to supply of a filter coefficient to a filter processor according to the other embodiment of the present invention.
FIG. 16 is a block diagram illustrating a configuration of an ALF included in an image encoding device according to the other embodiment of the present invention.
FIG. 17 is a schematic view of a buffer.
FIG. 18 is a block diagram illustrating a configuration of an ALF included in an image decoding device according to yet another embodiment of the present invention.

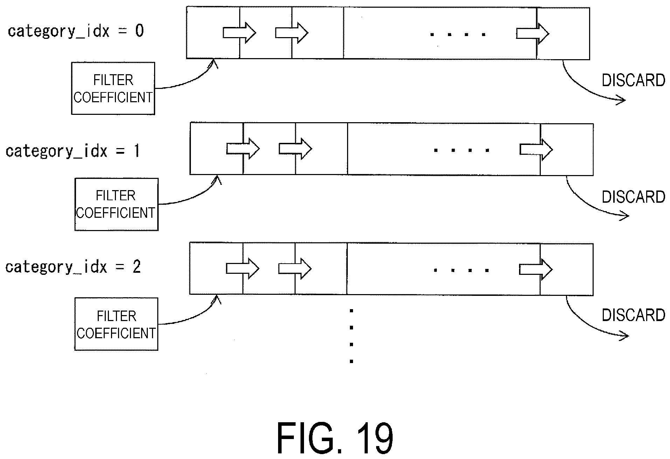

FIG. 19 is a schematic view of a filter coefficient buffer according to the other embodiment of the present invention.
FIG. 20 is a flowchart of processing from the deriving of a category index to storage of a filter coefficient in a filter coefficient buffer according to the other embodiment of the present invention.
FIG. 21 is a block diagram illustrating a configuration of an ALF included in an image encoding device according to the other embodiment of the present invention.
FIGS. 22A and 22B are diagrams illustrating configurations of a transmission device incorporating the image encoding device and a reception device incorporating the image decoding device. FIG. 22A illustrates a transmission device incorporating the image encoding device, and FIG. 22B illustrates a reception device incorporating the image decoding device.
FIGS. 23A and 23B are diagrams illustrating configurations of a recording device incorporating the image encoding device and a reproducing device incorporating the image decoding device. FIG. 23A illustrates a recording device incorporating the image encoding device, and FIG. 23B illustrates a reproducing device incorporating the image decoding device.

Description of Embodiments

First Embodiment

Hereinafter, embodiments of the present invention are described with reference to the drawings.

<Image transmission system>

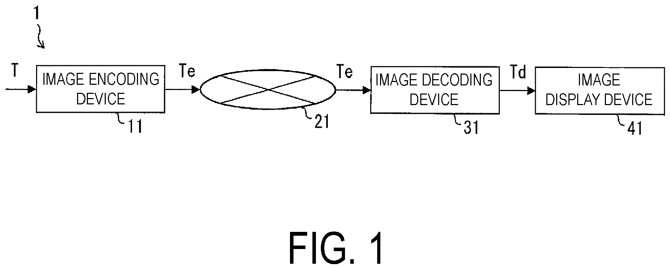

FIG. 1 is a schematic view illustrating a configuration of an image transmission system 1 according to one embodiment.

The image transmission system 1 is a system in which a code as a result of encoding a coding target image is transmitted and an image as a result of decoding the transmitted code is displayed. The image transmission system 1 includes an image encoding device 11 (video encoding device), a network 21, an image decoding device 31, and an image display device 41.

The image encoding device 11 receives an image T of a single layer or a plurality of layers. The layer is a concept with which a plurality of pictures can be distinguished from each other in a case where one or a plurality of pictures are in a given time period. For example, a single picture may be encoded with a plurality of layers with different image qualities or resolutions (scalable coding), or pictures with different points of view may be encoded with a plurality of layers (view scalable coding). An encoding efficiency can largely be improved with prediction (inter-layer prediction, inter-view prediction) between pictures of a plurality of layers. Encoded data can be obtained also in a case involving no prediction (simulcasting). The image encoding device 11 and the image decoding device 31 may handle a single-layer image, or may implement any appropriate combination between the scalable coding and the view scalable coding.

Encoded data Te generated by the image encoding device 11 is transmitted to the image decoding device 31 through the network 21. The network 21 includes the Internet, a Wide Area Network (WAN), a Local Area Network (LAN), and a combination of these. The network 21 is not necessarily limited to bidirectional communication networks, and may include unidirectional or bidirectional communication networks for transmitting broadcast waves for terrestrial digital broadcasting, satellite broadcasting, and the like. The network 21 may be replaced with a storage medium, such as a Digital Versatile Disc (DVD) or a Blue-ray Disc (BD), storing the encoded data Te.

The image decoding device 31 decodes each encoded data Te transmitted through the network 21, to generate one or a plurality of individually decoded images Td.

The image display device 41 displays a part of or all of one or a plurality of decoded images Td generated by the image decoding device 31. For example, the image display device 41 includes a display device such as a liquid crystal display or an Organic Electro-luminescence (EL) display. In a case where space scalable coding or SNR scalable coding is performed with the image decoding device 31 and the image display device 41 having a high processing performance, an enhancement layer image with high image quality is displayed. On the other hand, in a case where the coding is performed with the devices having a lower processing performance, a base layer image is displayed that requires processing performance and display performance not as high as those required for the enhancement layer.

<Structure of encoded data Te>

A data structure of the encoded data Te generated by the image encoding device 11 and decoded by the image decoding device 31 is described, before the image encoding device 11 and the image decoding device 31 according to the present embodiment are described in detail.

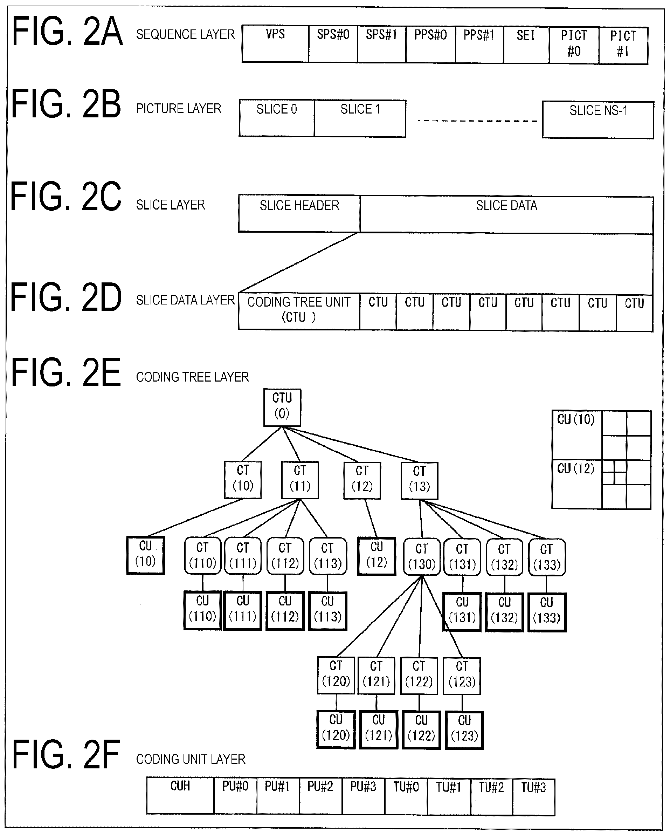

FIGS. 2A to 2F are diagrams illustrating a data hierarchical structure in the encoded data Te. For example, the encoded data Te includes a sequence and a plurality of pictures forming the sequence. FIGS. 2A to 2F respectively illustrate a sequence layer defining a sequence SEQ, a picture layer defining a picture PICT, a slice layer defining a slice S, a slice data layer defining slice data, a coding tree layer defining coding tree unit in the slice data, and a coding unit layer defining a Coding Unit (CU) in the coding tree.

(Sequence layer)

The sequence layer defines a group of data referred to by the image decoding device 31 for decoding the sequence SEQ that is a processing target. As illustrated in FIG. 2A, the sequence SEQ includes a Video Parameter Set (VPS), a sequence Parameter Set (SPS), a Picture Parameter Set (PPS), the picture PICT, and Supplemental Enhancement Information (SEI). In the figure, a value after # indicates a layer ID. FIG. 2A illustrates an example where encoded data of a layer 0 (#0) and a layer 1 (#1) exist. Note that the types of and the number of layers are not limited to this.

The video parameter set VPS defines a set of coding parameters common to a plurality of videos including a plurality of layers, and a group of coding parameters related to a plurality of layers in the video or each of the layers.

A sequence parameter set SPS defines a set of coding parameters referred to by the image decoding device 31 to decode the target sequence. For example, the set defines the width and the height of a picture. Note that a plurality of SPSs may be included. In this case, any of a plurality of SPSs is selected from the PPS.

The picture parameter set PPS defines a set of coding parameters referred to by the image decoding device 31 for decoding each picture in the sequence SEQ that is a processing target. For example, the set includes a reference value (pic_init_qp_minus26) for a quantization step size used for decoding a picture, and a flag (weighted_pred_flag) indicating that weighted prediction is applied. Note that a plurality of PPSs may be included. In this case, any one of the plurality of PPSs from each picture in the sequence SEQ that is a processing target is selected.

(Picture layer)

The picture layer defines a set of data referred to by the image decoding device 31 to decode the picture PICT that is a processing target. As illustrated in FIG. 2B, the picture PICT includes slices S0 to SNS-1(where NS represents the total number of slices in the picture PICT).

In the description below, the slices S0 to SNS-1 that do not need not to be distinguished from one to another may be denoted by the reference numeral with the suffix omitted. The same applies to other types of data, in a coding stream Te described later, appended with a suffix.

(Slice layer)

The slice layer defines a set of data referred to by the image decoding device 31 to decode a slice S that is a processing target. As illustrated in FIG. 2C, the slice S includes a slice header SH and slice data SDATA.

The slice header SH includes a coding parameter group referred to by the image decoding device 31 to determine a method for decoding the slice S that is a processing target. An example of the coding parameter in the slice header SH is slice type specifying information (slice_type) for specifying a slice type.

The slice type specifying information can specify the slice type including: (1) an I slice encoded with intra prediction only; (2) a P slice encoded with unidirectional prediction (uni-prediction) or intra prediction; and (3) a B slice encoded with uni-directional prediction, bidirectional prediction, or intra prediction.

The slice header SH may include a reference (pic_parameter_set_id) to the picture parameter set PPS in the sequence layer.

The slice header SH includes an ALF parameter ALFP referred to by an Adaptive Loop Filter (ALF) (in-loop filter) in the image decoding device 31. The ALF parameter ALFP will be described in detail later.

(Slice data layer)

The slice data layer defines a set of data referred to by the image decoding device 31 to decode the slice data SDATA that is a processing target. As illustrated in FIG. 2D, the slice data SDATA includes a Coded Tree Unit (CTU). The CTU is a block of a fixed size (64 x 64, for example) forming a slice, and may also be referred to as a Largest Cording Unit (LCU).

(Coding tree layer)

As illustrated in FIG. 2E, the coding tree layer defines a set of data referred to by the image decoding device 31 to decode the coding tree unit that is a processing target. The coding tree unit is divided by recursive quadtree division. A node with a tree structure obtained by the recursive quadtree division is referred to as a coding tree (CT). The CTU includes a division flag (split_flag), and is divided into four CTs if the split_flag is 1. If split_flag is 0, the CT is not divided, and has a single Coded Unit (CU) as a node. The coding unit CU is an end node of a coding tree layer, and thus indicates that the layer is not divided any further. The coding unit CU serves as a basic unit in coding processing.

In the case where the coding tree unit CTU has the size 64 x 64 pixels, the coding unit may have a size that is any one of 64 x 64 pixels, 32 x 32 pixels, 16 x 16 pixels, and 8 x 8 pixels.

(Coding unit layer)

As illustrated in FIG. 2F, the coding unit layer defines a set of data referred to by the image decoding device 31 to decode a coding unit that is a processing target. More specifically, the coding unit includes a prediction tree, a transform tree, and a CU header CUH. The CU header defines a division flag, a division pattern, a prediction mode, and the like.

The prediction tree defines prediction information (reference picture index, motion vector, or the like) on each prediction unit (PU) obtained by dividing the coding unit into one or a plurality of pieces. In other words, the prediction unit covers one or a plurality of non-overlapped areas in the coding unit. The prediction tree includes one or a plurality of prediction units obtained by the division as described above. A prediction unit obtained by further divining the prediction unit is hereinafter referred to as "subblock". The subblock includes a plurality of pixels. When the prediction unit and the subblock have the same size, one subblock resides in the prediction unit. When the prediction unit has a larger size than that of the subblock, the prediction unit is divided into subblocks. For example, when the prediction unit has a size of 8 x 8 and the subblock has a size of 4 x 4, the prediction unit is divided into four subblocks that are horizontally divided into two and vertically divided into two.

The prediction processing is performed for each prediction unit (subblock). Types of the division of the prediction tree are generally divided into two, one for intra prediction and the other for inter prediction. Intra prediction refers to prediction within the same picture, whereas inter prediction refers to prediction processing performed between different pictures (for example, between different display time points or layer images).

The division method for intra prediction includes a division into 2N x 2N (having the same size as that of the coding unit) and a division into N x N.

The division method for inter prediction includes the encoding of encoded data in a PU division mode (part_mode) and a division into 2N x 2N (having the same size as that of the coding unit), 2N x N, 2N x nU, 2N x nD, N x 2N, nL x 2N, nR x 2N, and N x N. It should be noted that 2N x nU refers to a division of the 2N x 2N coding unit into two areas of 2N x 0.5N and 2N x 1.5N sequentially from the above. 2N x nD refers to a division of the 2N x 2N coding unit into two areas of 2N x 1.5N and 2N x 0.5N sequentially from the above. nL x 2N refers to a division of the 2N x 2N coding unit into two areas of 0.5N x 2N and 1.5N x 2N sequentially from the left. nR x 2N refers to a division of the 2N x 2N coding unit into two areas of 1.5N x 2N and 0.5N x 1.5N sequentially from the left. Since the division is into any of one, two, and four pieces, one to four PUs can be included in a CU. These PUs are referred to as PU0, PU1, PU2, and PU3.

(ALF parameter ALFP)

The ALF filter parameter ALFP is included in the slice header SH as described above. The ALF unit is a syntax including information on a filter set used for the ALF processing and are described in detail later.

Not all the information required for the filter processing of a target unit area is necessarily included in the ALF parameter ALFP of the target unit area, and may be copied from the ALFP of another target unit area.

(Division method)

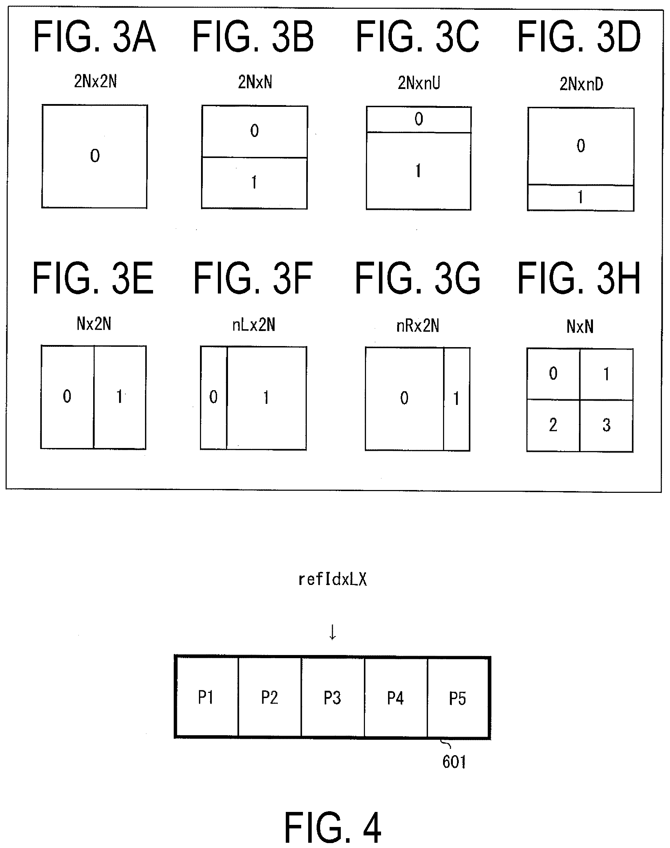

FIGS. 3A to 3H specifically illustrate the position of the boundary of PU division in CU in each division method.

FIG. 3A illustrates the 2N x 2N PU division mode with no division in CU.

FIGS. 3B, 3C, and 3D respectively illustrate partition shapes of 2N x N, 2N x nU, and 2N x nD in the PU division mode. Partitions defining 2N x N, 2N x nU, and 2N x nD in the PU division mode are hereinafter collectively referred to as landscape partitions.

FIGS. 3E, 3F, and 3G respectively illustrate partition shapes of N x 2N, nL x 2N, and nR x 2N in the PU division mode. Partitions defining N x 2N, nL x 2N, and nR x 2N in the PU division mode are hereinafter collectively referred to as portrait partitions.

The landscape partitions and the portrait partitions are collectively referred to as rectangular partitions.

FIG. 3H illustrates a partition shape of N x N in the PU division mode. The PU division mode as illustrated in FIGS. 3A and 3H is also referred to as square division on the basis of the partition shapes. The PU division mode as illustrated in FIGS. 3B to 3G is also referred to as non-square division on the basis of the partition shapes.

The numbers allocated to the partitions in FIGS. 3A to 3H are identification numbers along which processing is to be performed on the partitions. In other words, the identification numbers represent the order of partition scanning.

In FIGS. 3A to 3H, the upper left corner is the reference point (origin) of CU.

In the transform tree, the coding unit is divided into one or a plurality of transform units, with the position and size of each transform unit defined. In other words, the transform unit covers one or a plurality of non-overlapped areas in the coding unit. Furthermore, the transform tree includes one or a plurality of transform units obtained by the division as described above.

Division in the transform tree can be categorized into division with the area having the same size as the coding unit allocated as a transform unit and recursive quadtree division as with the division of CU described above.

The transform processing is performed for each transform unit.

(Prediction parameters)

Prediction images of prediction units (PU) are derived along prediction parameters accompanying the PU. Prediction parameters include prediction parameters for intra prediction and prediction parameters for inter prediction. The prediction parameters for inter prediction (inter prediction parameters) will be described below. The inter prediction parameters include prediction list use flags predFlagLO, predFlagL1, reference picture indices refIdxL0, refIdxL1, and vectors mvL0, mvL1. The prediction list use flags predFlagLO, predFlagL1 are flags representing whether a reference picture list referred to as L0list or L1list is used, and its value 1 indicates the use of the corresponding reference picture list. The term "flags representing whether XX" as used herein means that the value 1 indicates XX is satisfied and the value 0 indicates XX is not satisfied. In logical not or logical product, the value 1 is treated as true or the value 0 is treated as false (the same applies to the description below). Note that other values may be used as the true value and the false value in the actual device or method. A case where two reference picture lists are used, that is, a case where predFlagL0 = 1 and predFlagL1 = 1 corresponds to the bidirectional prediction. A case where a single reference picture list is used, that is, a case where (predFlagLO, predFlagL1)= (1, 0) or (predFlagLO, predFlagL1)= (0, 1) corresponds to the uni-prediction. The information about the prediction list use flag can also be represented by an inter prediction flag inter_pred_idc described later.

Examples of syntax element for deriving an inter prediction parameter included in the encoded data include a division mode part_mode, a merge flag merge_flag, a merge index merge_idx, an inter prediction flag inter_pred_idc, a reference picture index refIdxLX, a prediction vector index mvp_LX_idx, and a differential vector mvdLX.

(Example of reference picture list)

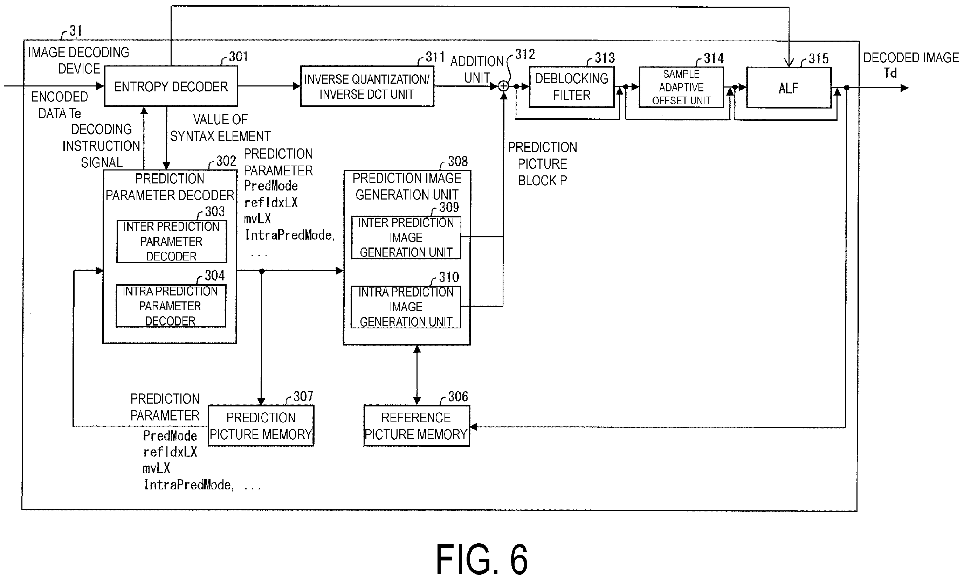

Next, an example of the reference picture list is described. The reference picture list is a string of reference pictures (reference images) stored in a reference picture memory 306 (FIG. 6). FIG. 4 is a conceptual diagram illustrating an example of a list of the reference pictures. A reference picture list 601 includes five rectangles aligned to be in a single string extending in a left and right direction. Each of the five rectangles represents a reference picture. Each of reference numerals P1, P2, P3, P4, and P5, arranged in this order from the left end toward the right, denotes a corresponding reference picture. The suffix indicates a picture order number POC. A downward arrow immediately below refIdxLX indicates that the reference picture index refIdxLX is for referring to the reference picture P3 in the reference picture 306.

(Example of reference picture)

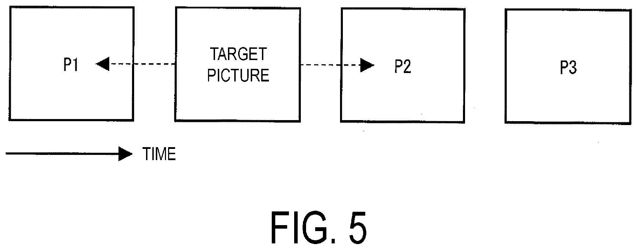

Next, an example of a reference picture referred to for deriving a vector is described. FIG. 5 is a conceptual diagram illustrating an example of the reference pictures. In FIG. 5, the horizontal axis represents display time. Each of four rectangles in FIG. 5 represent a picture. A second rectangle from the left of the four rectangles represents a picture that is a decoding target (target picture), and each of the remaining three rectangles represents a reference picture. A reference picture P1 pointed by a leftward arrow from the target picture is a past picture. A reference picture P2 pointed by a rightward arrow from the target picture is a future picture. The reference picture P1 or P2 in FIG. 5 is used for motion prediction with a target picture as a reference.

(Inter prediction flag and prediction list use flag)

The inter prediction flag inter_pred_flag and prediction list use flags predFlagL0 and predFlagL1 are in the following interchangeable relationship. Thus, the prediction list use flag or the inter prediction flag may be used as an inter prediction parameter. The prediction list use flag used for determination as described below may be replaced by the inter prediction flag. Conversely, the inter prediction flag used for determination as described below may be replaced by the prediction list use flag.

$$\text{inter\_pred\_flag} = (\text{predFlagL1} << 1) + \text{predFlagL0}$$

$$\text{predFlagL0} = \text{inter\_pred\_flag} \ \& \ 1$$

$$\text{predFlagL1} = \text{inter\_pred\_flag} >> 1$$

In the formulae, >> represents a rightward shift and << represents a leftward shift.

(Merge prediction and AMVP prediction)

A prediction parameter is decoded (encoded) in a merge prediction (merge) mode and an Adaptive Motion Vector Prediction (AMVP) mode. A merge flag merge_flag is for identifying these modes. In both the merge prediction mode and the AMVP mode, a prediction parameter of the target PU is derived by using a prediction parameter of a block that has already been processed. In the merge prediction mode, a prediction parameter of a neighboring PU that has already been derived is directly used with the prediction list use flag predFlagLX (or inter prediction flag inter_pred_idc), the reference picture index refIdxLX, or the motion vector mvLX not included in the encoded data. On the other hand, in the AMVP mode, the prediction list use flag predFlagLX (or inter prediction flag inter_pred_idc), the reference picture index refIdxLX, and the motion vector mvLX are included in the encoded data. The motion vector mvLX is encoded as a prediction vector index mvp_LX_idx for identifying the prediction vector mvpLX and a differential vector mvdLX.

The inter prediction flag inter_pred_idc is data indicating the type and the number of reference pictures, and is any one of values Pred_L0, Pred_L1, and Pred_Bi. Specifically, each of Pred_L0 and Pred_L1 indicates that a reference picture stored in a corresponding one of reference picture lists referred to as an L0 list and an L1 list is used, and both indicates that a single reference picture is used (uni-prediction). Prediction using the L0 list and the prediction using the L1 list are respectively referred to as L0 prediction and L1 prediction. On the other hand, Pred Bi indicates that two reference pictures are used (bidirectional prediction) and that two reference pictures stored in the L0 list and the L1 list are used. The prediction vector index mvp_LX_idx is an index indicating a prediction vector, and a reference picture index refIdxLX is an index indicating a reference picture stored in the reference picture list. Note that the sign LX indicates that the L0 prediction and the L1 prediction are not distinguished from one another, and is replaced with L0 or L1 so that a parameter of the L0 list and a parameter for the L1 list are distinguished from one another. For example, the sign refIdxL0 indicates a reference picture index used for the L0 prediction, the sign refIdxL1 indicates a reference picture index used for the L1 prediction, and the sign refIdxLX indicates that refIdxL0 and refIdxL1 are not distinguished from one another.

A merge index merge_idx is an index indicating which one of prediction parameter candidates (merge candidates), derived from blocks that have been processed, is used as a prediction parameter for the decoding target block.

(Motion vector)

A motion vector mvLX indicates a block shifted amount between two pictures captured at different points of time. A prediction vector and a differential vector related to the motion vector mvLX are respectively referred to as a prediction vector mvpLX and a differential vector mvdLX.

<Configuration of image decoding device>

Next, a configuration of the image decoding device 31 according to the present embodiment is described. FIG. 6 is a schematic view illustrating a configuration of the image decoding device 31 according to the present embodiment. The image decoding device 31 includes an entropy decoder 301, a prediction parameter decoder 302, the reference picture memory 306, a prediction parameter memory 307, a prediction image generation unit 308, an inverse quantization/inverse DCT unit 311, an addition unit 312, a deblocking filter 313, a sample adaptive offset unit 314, and an ALF 315.

The prediction parameter decoder 302 includes an inter prediction parameter decoder 303 and an intra prediction parameter decoder 304. The prediction image generation unit 308 includes an inter prediction image generation unit 309 and an intra prediction image generation unit 310.

The entropy decoder 301 performs entropy decoding on the encoded data Te received from the outside, so that the encoded data Te is split into individual symbols (syntax elements) to be decoded. The split symbols include prediction information for generating a prediction image, residual information for generating a differential image, and the like.

The entropy decoder 301 outputs a part of the split symbols to the prediction parameter decoder 302. For example, a part of the split symbols includes the prediction mode PredMode, the division mode part_mode, the merge flag merge_flag, the merge index merge_idx, the inter prediction flag inter_pred_idc, the reference picture index refIdxLX, the prediction vector index mvp_LX_idx, and the differential vector mvdLX. Control to determine which of the symbols is to be decoded is performed based on an instruction from the prediction parameter decoder 302. The entropy decoder 301 outputs a quantization coefficient to the inverse quantization/inverse DCT unit 311. This quantization coefficient is obtained by performing Discrete Cosine Transform (DCT) on a residual signal in the coding processing.

The inter prediction parameter decoder 303 refers to a prediction parameter stored in the prediction parameter memory 307 and decodes an inter prediction parameter, based on a symbol input from the entropy decoder 301.

The inter prediction parameter decoder 303 outputs the decoded inter prediction parameter to the prediction image generation unit 308, and stores the parameter in the prediction parameter memory 307. The inter prediction parameter decoder 303 will be described in detail later.

The intra prediction parameter decoder 304 refers to a prediction parameter stored in the prediction parameter memory 307 to decode an intra prediction parameter, based on a symbol received from the entropy decoder 301. The intra prediction parameter is a parameter used for predicting a CU within a single picture, and is an intra prediction mode IntraPredMode for example. The intra prediction parameter decoder 304 outputs the decoded intra prediction parameter to the prediction image generation unit 308, and stores the parameter in the prediction parameter memory 307.

The intra prediction mode derived by the intra prediction parameter decoder 304 may be different between luminance and chrominance. In this case, the intra prediction parameter decoder 304 decodes a luminance prediction mode IntraPredModeY as a prediction parameter for luminance, and decodes a chrominance prediction mode IntraPredModeC as a prediction parameter for chrominance. The luminance prediction mode IntraPredModeY is 35 modes corresponding to planar prediction (0), DC prediction (1), and directional prediction (2 to 34). The chrominance prediction mode IntraPredModeC is for using any one of planar prediction (0), DC prediction (1), directional prediction (2 to 34), and LM mode (35). The intra prediction parameter decoder 304 decodes a flag indicating whether the chrominance prediction mode IntraPredModeC is the same as the luminance prediction mode IntraPredModeY. In a case where the flag indicates that the mode is the same as the luminance prediction mode IntraPredModeY, the intra prediction parameter decoder 304 may allocate the luminance prediction mode IntraPredModeY to the chrominance prediction mode IntraPredModeC. In a case where the flag indicates that the mode is different from the luminance prediction mode, the intra prediction parameter decoder 304 may decode the planar prediction (0), DC prediction (1), directional prediction (2 to 34), and LM mode (35) as the chrominance prediction mode IntraPredModeC.

The reference picture memory 306 stores a decoded image of a CU generated by the addition unit 312 at a predetermined position for each picture and CU of the decoding target.

The prediction parameter memory 307 stores a prediction parameter at a predetermined position for each picture and CU as the decoding target. More specifically, the prediction parameter memory 307 stores an inter prediction parameter decoded by the inter prediction parameter decoder 303, an intra prediction parameter decoded by the intra prediction parameter decoder 304, and a prediction mode predMode split by the entropy decoder 301. Examples of the inter prediction parameter stored include a prediction list use flag predFlagLX (inter prediction flag inter_pred_idc), a reference picture index refIdxLX, and a motion vector mvLX.

The prediction image generation unit 308 receives a prediction mode predMode input from the entropy decoder 301, and also receives a prediction parameter from the prediction parameter decoder 302. The prediction image generation unit 308 reads a reference picture from the reference picture memory 306. The prediction image generation unit 308 generates a prediction image for a PU by using the prediction parameter received and the reference picture read, in the prediction mode indicated by the prediction mode predMode.

In a case where the prediction mode predMode indicates the inter prediction mode, the inter prediction image generation unit 309 generates the prediction image for the PU through the inter prediction by using the inter prediction parameter received from the inter prediction parameter decoder 303 and the reference picture read.

The inter prediction image generation unit 309 reads a reference picture block from the reference picture memory 306. Specifically, the reference picture block is at a position indicated by the motion vector based on the decoding target PU, in a reference picture, indicated by the reference picture index refIdxLX, in the reference picture list (the L0 list or the L1 list) corresponding to the prediction list use flag predFlagLX with a value 1. The inter prediction image generation unit 309 generates the prediction image of the PU through prediction based on the reference picture block read. The inter prediction image generation unit 309 outputs the prediction image of the PU generated to the addition unit 312.

In a case where the prediction mode predMode indicates the intra prediction mode, the intra prediction image generation unit 310 performs the intra prediction by using the intra prediction parameter received from the intra prediction parameter decoder 304 and a reference picture read. More specifically, the intra prediction image generation unit 310 reads an adjacent PU within a predetermined range from the decoding target PU, in PUs that have already been decoded, from the reference picture memory 306. For example, in a case where the decoding target PU sequentially moves in what is known as a raster scanning order, the predetermined range corresponds any one of the adjacent PU on any one of the left side, the upper left side, the upper side, and the upper right side that is determined depending on the intra prediction mode. The raster scanning order is an order of movement from the left end to the right end one by one in rows from the upper end to the lower end.

The intra prediction image generation unit 310 generates the prediction image of the PU through prediction, indicated by the intra prediction mode IntraPredMode, with the adjacent PU read. The intra prediction image generation unit 310 outputs the prediction image of the PU generated to the addition unit 312.

In a case where the intra prediction parameter decoder 304 derives different intra prediction modes for luminance and for chrominance, the intra prediction image generation unit 310 generates a prediction image of the PU corresponding to the luminance, through any one of the planar prediction (0), the DC prediction (1), and directional prediction (2 to 34) depending on the luminance prediction mode IntraPredModeY. The intra prediction image generation unit 310 generates a prediction image of the PU corresponding to the chrominance, through any one of the planar prediction (0), DC prediction (1), directional prediction (2 to 34), and LM mode (35) depending on the chrominance prediction mode IntraPredModeC.

The inverse quantization/inverse DCT unit 311 performs inverse quantization on the quantization coefficient, received from the entropy decoder 301, to obtain a DCT coefficient. The inverse quantization/inverse DCT unit 311 performs Inverse Discrete Cosine Transform (DCT) on the DCT coefficient obtained, to calculate a decoded residual signal. The inverse quantization/inverse DCT unit 311 outputs the decoded residual signal calculated to the addition unit 312.

The addition unit 312 takes a sum of the prediction images of the PU received from the inter prediction image generation unit 309 and the intra prediction image generation unit 310 and the decoded residual signal received from the inverse quantization/inverse DCT unit 311, for each pixel, to generate the decoded image of the PU. The addition unit 312 outputs the decoded image of the PU generated to at least one of the deblocking filter 313, the sample adaptive offset unit 314, and the ALF 315, for each picture.

In a case where a difference between pixels adjacent to each other with a CU boundary therebetween in a non-deblocking pixel value is smaller than a predetermined threshold, the deblocking filter 313 performs deblocking processing on the CU boundary to perform image smoothing around the CU boundary. The image resulting from the deblocking processing by the deblocking filter 313 is output to the sample adaptive offset unit 314 as a deblocked decoded image. The non-deblocking pixel value is a pixel value in the image output from the addition unit 312.

The sample adaptive offset unit 314 performs offset filter processing, using an offset decoded from the encoded data Te, on the non-offset-filter decoded image for each predetermined unit, to generate an offset-filtered decoded image. The non-offset-filter decoded image may be an image output from the addition unit 312, or a deblocked decoded image output from the deblocking filter 313.

The ALF 315 performs adaptive filter processing, using the ALF parameter ALFP decoded from the encoded data Te, on the ALF-unperformed decoded image (unfiltered decoded image) to generate an ALF-filtered decoded image. The ALF-filtered decoded image is output as a decoded image Td, and is also stored in the reference picture memory 306 in association with POC information decoded from the encoded data Te, by the entropy decoder 301. A specific configuration of the ALF 315 is described later and thus the description thereof is omitted herein. The ALF-unperformed decoded image may be an image output from the addition unit 312, a deblocked decoded image, or an offset-filtered decoded image.

(ALF 315)

The ALF 315 performs adaptive filter processing on the ALF-unperformed decoded image recPicture to generate a filtered decoded image alfPicture.

More specifically, the ALF 315 performs the ALF processing on a target unit area in accordance with a parameter (pixel value) of the ALF-unperformed decoded image recPicture of the target unit area, by using a filter coefficient associated with the target unit area, in the filter coefficients decoded from the encoded data Te. The target unit area may employ a tree block, a fixed size (for example, 4 x 4 pixels, or 2 x 2 pixels) independent from the CU, a quadtree with a picture independent from the tree structure as the root, a tree structure (CTU or CU) of the CTU, or the like.

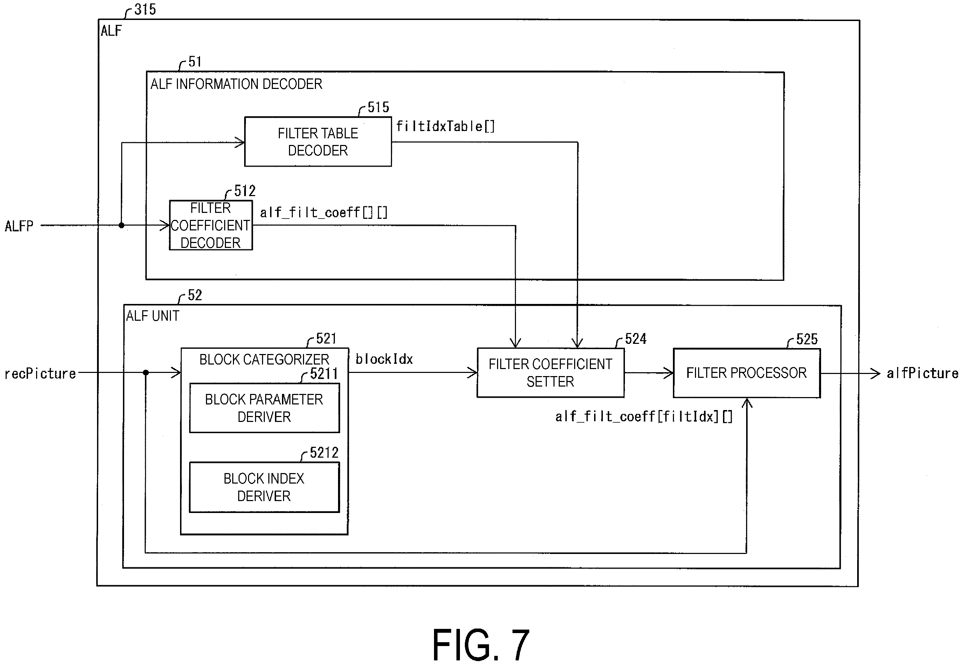

FIG. 7 is a block diagram illustrating a configuration of the ALF 315. As illustrated in FIG. 7, the ALF 315 includes an ALF information decoder 51 and an ALF unit 52.

(ALF information decoder 51)

The ALF information decoder 51 decodes a filter coefficient alf_filt_coeff[][] and a filter index table filtIdxTable[], based on an ALF parameter ALFP included in the encoded data Te. The filter coefficient alf_filt_coeff[][] and the filter index table filtIdxTable[] decoded are supplied to the ALF unit 52.

As illustrated in FIG. 7, the ALF information decoder 51 includes a filter coefficient decoder 512 and a filter table decoder 515.

The filter coefficient decoder 512 decodes the filter coefficient alf_filt_coeff[][] included in the ALF parameter ALFP. The filter coefficient alf_filt_coeff[][] decoded is supplied to the filter coefficient setter 524 of the ALF unit 52.

The filter table decoder 515 decodes the filter index table filtIdxTable[]included in the ALF parameter ALFP. The filter table may be decoded by any method that is the same as that for the encoding, such as fixed length encoding or variable length coding (CABAC, CAVLC). Note that fltIdx for selecting a filter coefficient used by the filter processor 525 is derived based on the filter index table filtIdxTable[] and a block index blockIdx described later. The filter index table filtIdxTable[] indicates correspondence between the block index blockIdx and the filter index fltIdx.

(ALF unit 52)

The ALF unit 52 is configured to perform ALF processing on each target unit area forming the ALF-unperformed decoded image recPicture to generate a filtered decoded image alfPicture. A filter coefficient used for the adaptive filter processing on each target unit area is selected from the filter coefficients alf_filt_coeff[][] decoded from the ALF parameter ALFP, by using the block index blockIdx based on a block parameter (pixel value) of the ALF-unperformed decoded image recPicture in the target unit area.

As illustrated in FIG. 7, the ALF unit 52 includes a block categorizer 521, a filter coefficient setter 524, and a filter processor 525.

(Block categorizer 521)

The block categorizer 521 calculates the block parameter (pixel value) in the target unit area. The block categorizer 521 derives the block index blockIdx of the target unit area based on the block parameter calculated. Processing of deriving the block index blockIdx is described later.

(Filter coefficient setter 524)

The filter coefficient setter 524 (filter index deriver) derives a filter index fltIdx by using the filter index table fltIdxTable[] decoded by the filter table decoder 515 and the block index blockIdx derived by the block categorizer 521.

$$\text{fltIdx} = \text{filtIdxTable[blockIdx]}$$

The filter coefficient setter 524 supplies a filter coefficient alf_filt_coeff[fltIdx][], derived by using the filter index fltIdx derived, to the filter processor 525.

(Filter processor 525)

The filter processor 525 performs filter processing, using the filter coefficient alf_filt_coeff[fltIdx][] supplied from the filter coefficient setter 524, on each pixel in a target unit area, to generate the ALF-filtered decoded image alfPicture in the target unit area.

More specifically, the filter processor 525 calculates the pixel value $S_F(x,y)$ with the following formula, where $S_F(x,y)$ represents the pixel value of the filter target pixel in the ALF-filtered decoded image alfPicture, and $S(x,y)$ represents the pixel value in the ALF-unperformed decoded image recPicture.

[Formula 1]

$$S_F(x,y) = \left( \sum_{(u,v)\in R} a(u,v) \times S(x+u,y+v) \right) + o$$

In the formula, a(u,v) represents a filter coefficient multiplied by the pixel value S(x+u,y+v) of the ALF-unperformed image recPicture, and corresponds to each component of the filter coefficient alf_filt_coeff[fltIdx][] supplied from the filter coefficient setter 524, and O represents an offset component in the filter coefficient alf_filt_coeff[fltIdx][].

Furthermore, in the formula described above, R represents a filter reference area referred to in the filter processing. The filter reference area R may be a diamond shaped area centered on the pixel (x,y) for example. However, the reference area R according to the present embodiment is not limited to such an example. For example, the reference area may have a rectangular shape.

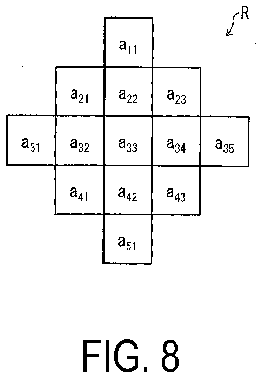

FIG. 8 is a diagram illustrating pixels included in the filter reference area R and corresponding filter coefficients. Note that $a_{uv}$ corresponds to a filter coefficient a(u,v) representing each component of the filter coefficient alf_filt_coeff[fltIdx][], As illustrated in FIG. 8, the filter coefficient a (u,v) is allocated to each pixel in the filter reference area R. In the example illustrated in the figure, the filter reference area R has a diamond shape and includes 13 pixels. In this case, filter coefficient alf_filt_coeff[fltIdx][] is represented as follows. Note that o represents an offset.

alf_filt_coeff[fltIdx][]= { a11, a21, a22, a23, a31, a32, a33, a34, a35, a41, a42, a43,

a51, o }

Each filter coefficient may be configured to be allocated to each pixel in the filter reference area R to have a rotational symmetry of 180 degrees. Thus, a configuration satisfying a(u,v) = a(-u,-v) may be set. With this configuration, the number of alf_filt_coeff[][] can be reduced.

<Image decoding processing>

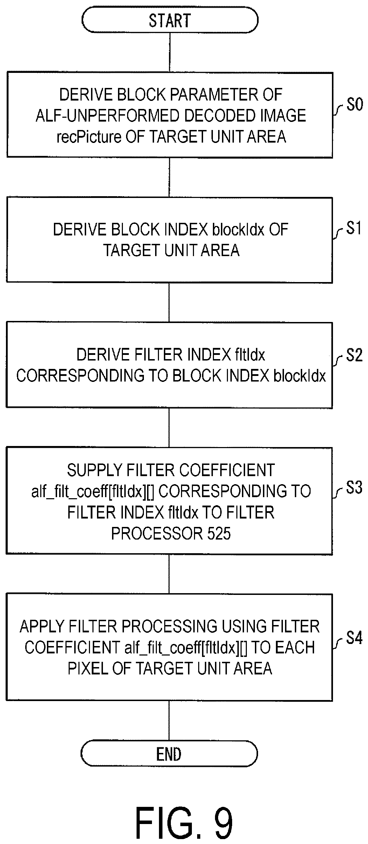

The filter processing performed by the image decoding device 31 according to the present embodiment by using the filter coefficient alf_filt_coeff[][] in accordance with the block index blockIdx is described with reference to FIG. 9. FIG. 9 is a flowchart of processing from the deriving of the block index blockIdx to generation of an ALF-filtered decoded image alfPicture.

First of all, the block categorizer 521 derives a block parameter indicating a pixel value of the ALF-unperformed decoded image recPicture in the target unit area (S0). Next, the block index blockIdx is derived by using this block parameter (Step S1, herein after referred to as "S1").

The filter coefficient setter 524 derives the filter index fltIdx by using the filter index table filtIdxTable[] decoded by the filter table decoder 515 and the block index blockIdx derived by the block categorizer 521 (S2). The filter coefficient setter 524 supplies the filter coefficient alf_filt_coeff[fltIdx][] corresponding to the filter index fltIdx derived, to the filter processor 525 (S3).

The filter processor 525 performs the filter processing by using the filter coefficient alf_filt_coeff[fltIdx][] on each pixel in the target unit area (S4). Thus, the filter processor 525 generates the ALF-filtered decoded image alfPicture in the target unit area.

With the configuration described above, a filter coefficient corresponding to a block index of each target unit area is used so that the filter processing can be performed by using a more optimum filter coefficient on each target unit area. The block index corresponding to the block parameter of each target unit area and the filter index is derived by using the block index and the filter table, whereby the size of the filter coefficient can be reduced. Therefore, the present embodiment can achieve high coding efficiency with a low throughput.

Specific examples of processing of deriving the block index are described below. Note that the specific example of the processing of deriving the block index is not limited to these.

(Example-1 of processing of deriving block index)

The block categorizer 521 includes a block parameter deriver 5211 that derives a block parameter, such as an edge direction (direction) and activity, of the target unit area, and a block index deriver 5212. The block parameter deriver 5211 derives the edge direction and activity with the following formula.

For example, in a case where the edge direction includes three types of directions including horizontal, vertical, and no edge, the block parameter deriver 5211 can calculate a direction Dir and activity Act in the following manner. More specifically, the block parameter deriver 5211 first derives a pixel value variation $V_{i,j}$ in the horizontal direction and a pixel value variation $H_{i,j}$ in the vertical direction of each pixel (i,j) in the target unit area, with the following respective Formulae.

[Formula 2]

$$V_{i,j} = |\hat{I}_{i,j} \times 2 - \hat{I}_{i,j-1} - \hat{I}_{i,j+1}|$$

$$H_{i,j} = |\hat{I}_{i,j} \times 2 - \hat{I}_{i-1,j} - \hat{I}_{i+1,j}|$$

In the formulae, $\hat{I}_{i,j}$(i,j) represents a luminance value, with upper left coordinates of the target unit area as the origin.

Next, the block parameter deriver 5211 performs multistage (three stages and five stages respective, in the present example) quantization on the direction Dir and the activity Act in the target unit area, with the following Formula, based on the pixel value variation $V_{i,j}$ in the horizontal direction and the pixel value variation $H_{i,j}$ in the vertical direction of each pixel (i,j) in the target unit area.

[Formula 3]

$$Dir = \begin{cases} 1, if \ \left( \sum_{i=0}^{3} \sum_{j=0}^{3} H_{i,j} > 2 \times \sum_{i=0}^{3} \sum_{j=0}^{3} V_{i,j} \right) \\ 2, if \ \left( \sum_{i=0}^{3} \sum_{j=0}^{3} V_{i,j} > 2 \times \sum_{i=0}^{3} \sum_{j=0}^{3} H_{i,j} \right) \\ 0, \quad Otherwise \end{cases}$$

$$Act = \sum_{i=0}^{3} \sum_{j=0}^{3} \left( \sum_{m=i-1}^{i+1} \sum_{m=j-1}^{j+1} (V_{m,n} + H_{m,n}) \right)$$

In a case where, the edge direction includes five types of directions including two diagonal directions as well as horizontal, vertical, and no edge, the block parameter deriver 5211 can calculate the direction Dir and the activity Act as follows.

The block parameter deriver 5211 first derives the sum of pixel value variations $g_h$ in the horizontal direction and the sum of pixel value variations $g_v$ related to the pixel group (target pixel group) in the target unit area, with the following respective formulae.

[Formula 4]

$$g_v = \sum_{k=i-2}^{i+3} \sum_{l=j-2}^{j+3} |2R(k,l) - R(k,l-1) - R(k,l+1)|$$

$$g_h = \sum_{k=i-2}^{i+3} \sum_{l=j-2}^{j+3} |2R(k,l) - R(k-1,l) - R(k+1,l)|$$

The block parameter deriver 5211 derives pixel value variations $g_{d1}$ and $g_{d2}$ in the two diagonal directions related to the pixel group (target pixel group) in the target unit area, with the following respective formulae.

[Formula 5]

$$g_{d1} = \sum_{k=i-2}^{i+3} \sum_{l=j-2}^{j+3} |2R(k,l) - R(k-1,l-1) - R(k+1,l+1)|$$

$$g_{d2} = \sum_{k=i-2}^{i+3} \sum_{l=j-2}^{j+3} |2R(k,l) - R(k-1,l+1) - R(k+1,l-1)|$$

Next, the block parameter deriver 5211 performs multistage (five stages in the following example) quantization on the direction Dir (corresponding to D in the following Formula) in the target unit area, with the following Formula, based on the sum of pixel value variations $g_v$ in the horizontal direction, the sum of pixel value variations $g_h$ in the vertical direction, and the pixel value variations $g_{d1}$ and $g_{d2}$ in the two diagonal directions.

[Formula 6]

Step 1. If both $g_{h,v}^{max} \leq t_1 \cdot g_{h,v}^{min}$ and $g_{d0,d1}^{max} \leq t_1 \cdot g_{d0,d1}^{min}$, $D$ is set to $0$.

Step 2. If $g_{h,v}^{max}/g_{h,v}^{min} > g_{d0,d1}^{max}/g_{d0,d1}^{min}$ continue from Step $3$, otherwise continue from Step $4$

Step 3. If $g_{h,v}^{max} > t_2 \cdot g_{h,v}^{min}$, $D$ is set to $2$, otherwise $D$ is set to $1$.

Step 4. If $g_{d0,d1}^{max} > t_2 \cdot g_{d0,d1}^{min}$, $D$ is set to $4$, otherwise $D$ is set to $3$.

here,

$$g_{h,v}^{max} = max(g_h, g_v)、\ g_{h,v}^{min} = min(g_h, g_v)、\ g_{d0,d1}^{max} = max(g_{d0}, g_{d1})、\ g_{d0,d1}^{min} = min(g_{d0}, g_{d1})$$

holds true.

The method of calculating the direction described above requires the pixel value variation to be derived in the horizontal direction, the vertical direction, and in the two diagonal directions, and thus involves a large throughput in the block parameter deriver 5211. Thus, the block parameter deriver 5211 according to the present embodiment derives pixel value variations $g_{d1}$ and $g_{d2}$ in the two diagonal directions through the following respective formulae.

[Formula 7]

$$g_{d1} = |R(i,j) - R(i+M-1, j+M-1)|$$
$$g_{d2} = |R(i+M-1, j) - R(i, j+M-1)|$$

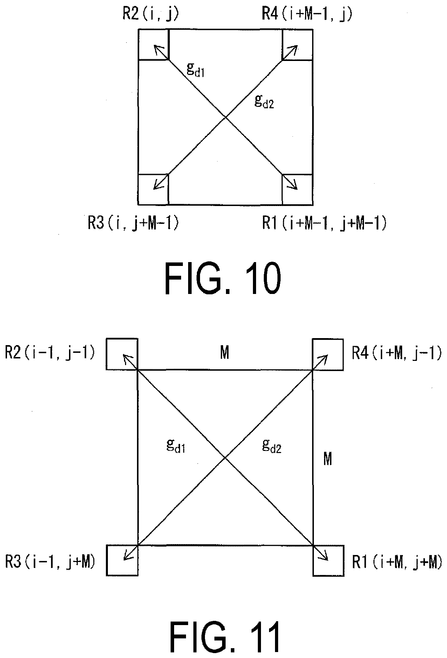

FIG. 10 schematically illustrates upper left, upper right, lower left, and lower right pixels in a target unit area. The pixel value variation $g_{d1}$ in one of the diagonal direction related to a pixel group (M x M pixels in the figure) in the target unit area is a simple difference between a lower right pixel R1(i+M-1,j+M-1) and an upper left pixel R2(i,j). The pixel value variation $g_{d2}$ in the other diagonal direction is a simple difference between a lower left pixel R3(i,j+M-1) and an upper right pixel R4(i+M-1,j).

FIG. 11 schematically illustrates upper left, upper right, lower left, and lower right pixels in another target unit area different from the one illustrated in FIG. 10. The pixel value variation $g_{d1}$ in one of the diagonal direction related to a pixel group (M x M pixels in the figure) in the target unit area is a simple difference between a lower right pixel R1(i+M,j+M) and an upper left pixel R2(i-1,j-1). The pixel value variation $g_{d2}$ in the other diagonal direction is a simple difference between a lower left pixel R3(i-1,j+M) and an upper right pixel R4(i+M,j-1).

Next, the block parameter deriver 5211 performs multistage quantization on the directivity of the target unit area to derive the direction Dir, based on the sum of pixel value variations $g_v$ in the horizontal direction, the sum of pixel value variations $g_h$ in the vertical direction, and the pixel value variation $g_{d1}$ and $g_{d2}$ in the two diagonal directions calculated. A first example of the method of calculating the direction is described below. The directivity of the target unit area is categorized into six types with the following formulae.

$$\text{if } (g_h > 2 * g_v)\{$$
$$\quad \text{Dir} = 2;$$
$$\}\text{else if } (g_v > 2 * g_h)\{$$
$$\quad \text{Dir} = 3;$$
$$\}\text{else}\{$$
$$\quad \text{if } (g_{d1} > g_{d2}) \text{ Dir} = 0; \text{ else Dir} = 1;$$
$$\}$$

A second example of the method of calculating the direction is described below. The block parameter deriver 5211 categorizes the directivity of the target unit area into six types with the following formulae.

$$if\ (g_h > 2 * g_v)\{$$
$$if\ (g_{d1} > g_{d2})\ Dir = 2;\ else\ Dir = 3;$$
$$\}else\ if\ (g_v > 2 * g_h)\{$$
$$if\ (g_{d1} > g_{d2})\ Dir = 4;\ else\ Dir = 5;$$
$$\}else\{$$
$$if\ (g_{d1} > g_{d2})\ Dir = 0;\ else\ Dir = 1;$$
$$\}$$

A third example of the method of calculating the direction is described below. The block parameter deriver 5211 categorizes the directivity of the target unit area into eight types with the following formulae.

$$if\ (g_h > 3 * g_v)\{$$
$$if\ (g_{d1} > g_{d2})\ Dir = 2;\ else\ Dir = 3;$$
$$\}else\ if\ (g_v > 3 * g_h)\{$$
$$if\ (g_{d1} > g_{d2})\ Dir = 4;\ else\ Dir = 5;$$
$$\}else\{$$
$$if\ (g_{d1} > g_{d2})$$
$$if\ (g_v > g_h)\ Dir = 0;\ else\ Dir = 1;$$
$$else$$
$$if\ (g_v > g_h)\ Dir = 6;\ else\ Dir = 1;$$
$$\}$$

A method of calculating the activity Act with five types of edge directions is the same as a method of calculating the activity Act with three types of edge directions.

The block index deriver 5212 derives the block index blockIdx from the block parameter derived.

$$blockIdx = Act + (number\ of\ types\ of\ Act) * Dir$$

For example, in the first example, the direction Dir is of four types and the activity Act is of five types, resulting in the block index of 20 types. In the second example, the direction Dir is of six types and the activity Act is of five types, resulting in the block index of 30 types. In the third example, the direction Dir is of eight types and the activity Act is of five types, resulting in the block index of 30 types.

With the configuration described above, each of the pixel value variations gd1 and gd2 is a simple difference between two pixel values, whereby a processing amount for calculating the pixel value variations gd1 and gd2t in the two diagonal direction can be reduced so that a throughput in the block parameter deriver 5211 can be reduced. Therefore, this example can achieve high coding efficiency with a low throughput.

(Example-2 of processing of deriving block index)

The block parameter deriver 5211 may use pixel value information (luminance, chrominance) instead of the direction and the activity in the example described above. With such block parameters, the filter processing optimum for each of objects different from each other in luminance information can be achieved. Furthermore, the optimum filter processing can also be achieved for a monotone pattern, with different objects identified based on chrominance information. For example, the block parameter deriver 5211 may derive the block parameter of the target unit area based on the average luminance value in the target unit area. More specifically, the block parameter deriver 5211 quantizes the average luminance value avgLuma in the target unit area in M0 stages.

The block index deriver 5212 derives the block index blockIdx corresponding to an average luminance value avgLuma (an average value of luminance values) in the target unit area with the following formula, based on the average luminance value avgLuma after the quantization.

$$blockIdx = avgLuma >> (bitDepth - m0)$$

In the formula, bitDepth represents a bit depth of a pixel value. For example, bitDepth of a value N indicates a range of pixel values between 0 to 2N-1. Furthermore, m0 = log2(M0).

(Example-3 of processing of deriving block index)

The block parameter deriver 5211 may use a maximum luminance value and a minimum luminance value in the target unit area, as the block parameters of the target unit area. More specifically, the block parameter deriver 5211 quantizes a maximum luminance value maxLuma and a minimum luminance value minLuma in the target unit are respectively in M1 and M2 stages. The block index deriver 5212 derives the block index blockIdx with the following Formula, based on the maximum luminance value maxLuma (the maximum value of the luminance values) and the minimum luminance value minLuma (the minimum value of the luminance values) quantized.

$$blockIdx = ((maxLuma >> (bitDepthY - m1)) << m2) + (minLuma >> (bitDepthY - m2))$$

In the formula, m1 = log2(M1) and m2 = log2(M2).

In the example described above, the block index deriver 5212 derives the block index of a target unit area based on the maximum luminance value and the minimum luminance value in the target unit area. However, the present example is not limited to this. The block index deriver 5212 may derive the block index based on at least any one of the maximum luminance value and the minimum luminance value in the target unit area.

For example, the block index deriver 5212 may derive the block index blockIdx corresponding to the maximum luminance value maxLuma in the target unit area, with the following formula.

$$blockIdx = maxLuma >> (bitDepthY - m1)$$

Alternatively, the block index deriver 5212 may derive the block index blockIdx corresponding to the minimum luminance value minLuma in the target unit area, with the following formula.

$$blockIdx = minLuma >> (bitDepthY - m2)$$

(Example-4 of processing of deriving block index)

The block parameter deriver 5211 may use the average luminance value, the maximum luminance value, and the minimum luminance value in the target unit area, as the block parameter of the target unit area. More specifically, the block parameter deriver 5211 quantizes the average luminance value avgLuma, the maximum luminance value maxLuma, and the minimum luminance value minLuma in the target unit area, respectively in the M0 stages, the M1 stages, and the M2 stages. The block index deriver 5212 derives the block index blockIdx with the following formula, based on the average luminance value avgLuma, the maximum luminance value maxLuma, and the minimum luminance value minLuma after the quantization.

$$blockIdx = (avgLuma >> (bitDepthY-m0) << (m1 + m2)) + ((maxLuma >> (bitDepthY - m1)) << m2) * (minLuma >> (bitDepthY - m2))$$

In the formula, m0 = log2(M0).

In the example described above, the block index deriver 5212 derives the block index of the target unit area based on the average luminance value, the maximum luminance value, and the minimum luminance value in the target unit area. However, the present example is not limited to this. The block index deriver 5212 may derive the block index based on at least one of the average luminance value, the maximum luminance value, and the minimum luminance value in the target unit area.

For example, the block index deriver 5212 may derive the block index blockIdx corresponding to the average luminance value avgLuma and the maximum luminance value maxLuma in the target unit area with the following formula.

$$blockIdx = (avgLuma>>(bitDepthY - m0)<<m1) + (maxLuma>>(bitDepthY - m1))$$

Alternatively, the block index deriver 5212 may derive the block index blockIdx corresponding to the average luminance value avgLuma and the minimum luminance value minLuma in the target unit area with the following formula.

$$blockIdx = (avgLuma>>(bitDepthY-m0)<<m2) + (minLuma>>(bitDepthY - m2))$$

(Example-5 of processing of deriving block index)

The block parameter deriver 5211 may use an average luminance value and a dynamic range in a target unit area, as the block parameter of the target unit area. The dynamic range is a luminance difference between the maximum luminance value and the minimum luminance value.

More specifically, the block parameter deriver 5211 quantizes the average luminance value avgLuma in the target unit area, and the dynamic range that is a difference between the maximum luminance value maxLuma and the minimum luminance value minLuma in the target unit area, respectively in the M0 stages and M3 stages. The block index deriver 5212 derives the block index blockIdx corresponding to the average luminance value avgLuma and the dynamic range in the target unit area with the following formula, based on the average luminance value avgLuma and the dynamic range after the quantization.

$$blockIdx = (avgLuma>>(bitDepthY-m0)<<m3) + (maxLuma-minLuma)>>(bitDepthY - m3)$$

In the formula, m3 = log2(M3).

(Example-6 of processing of deriving block index)

The block parameter deriver 5211 may derive the block index based on the pixel value information about the target unite area, the direction and the activity of the edge, as the block parameters. With a plurality of block parameters, the blocks of the target unit areas can be more accurately categorized.

More specifically, the block parameter deriver 5211 first derives the direction Dir and the activity Act in the target unit area with the calculation methods described above, and then quantizes the direction Dir and the activity Act respectively in Md and Ma stages.

The block parameter deriver 5211 further quantizes the average luminance value avgLuma in the target unit area by the M0 stages. The block index deriver 5212 derives the block index blockIdx corresponding to the direction Dir, the activity Act, and the average luminance value avgLuma in the target unit area with the following formula, based on the direction Dir, the activity Act, and the average luminance value avgLuma quantized.

$$blockIdx = Act + Ma * Dir + (Ma * Md)*(avgLuma>>(bitDepth - m0))$$

In the example described above, the block index deriver 5212 derives the block index of the target unit area based on the direction, the activity, and the average luminance value in the target unit area. However, the present example is not limited to this. The block index deriver 5212 may derive the block index of a target unit area based on at least one of the direction and the activity in the target unit area. The block index deriver 5212 may derive the block index of a target unit area based on at least one of the directivity and the activity of the target unit area and at least one of the average luminance value, the maximum luminance value, and the minimum luminance value.

For example, the block index deriver 5212 derives the block index blockIdx corresponding to the direction Dir, the activity Act, and the average luminance value avgLuma in the target unit area with the following formula, based on the direction Dir and the activity Act, as well as the maximum luminance value maxLuma and minimum luminance value minLuma quantized.

$$\text{blockIdx} = \text{Act} + \text{Ma} * \text{Dir} + (\text{Ma} * \text{Md}) * ((\text{maxLuma}>>(\text{bitDepth} - \text{m1})<<\text{m2}) +$$

$$(\text{minLuma}>>(\text{bitDepth} - \text{m2})))$$

(Example-7 of processing of deriving block index)

The block parameter deriver 5211 may use the dynamic range and the direction in the target unit area as the block parameter. More specifically, the block parameter deriver 5211 first quantizes the dynamic range in the target unit area in multiple stages (five staged in this example) with the following formula, to derive a dynamic range dynamicRange'.

$$\text{dynamicRange'} = 0 <= \text{dynamicRange} < 8 : 0$$

$$8 <= \text{dynamicRange} < 16 : 1$$

$$16 <= \text{dynamicRange} < 32 : 2$$

$$32 <= \text{dynamicRange} < 64 : 3$$

$$64 <= \text{dynamicRange} : 4$$

The direction Dir is calculated and quantized in a manner that is the same as those in Example-6 of processing of deriving block index described above. The block index deriver 5212 derives the block index blockIdx in the target unit area with the following formula, based on the dynamic range dynamicRange' and the direction Dir quantized.

$$\text{blockIdx} = \text{Dir} + \text{Md}*\text{dynamicRange'}$$

In the example described above, the block index deriver 5212 derives the block index based on the dynamic range and the direction in the target unit area. However, the present example is not limited to this. The block index deriver 5212 may derive the block index based on at least one of the dynamic range, the direction, and the activity in the target unit area.

(Example-8 of processing of deriving block index)

The block parameter deriver 5211 may use one of the maximum luminance value and the minimum luminance value in the target unit area closer to the average luminance value in the target unit area, as one of the block parameters. More specifically, the block parameter deriver 5211 first selects a value MinMax that is one of the maximum luminance value maxLuma and the minimum luminance value minLuma in the target unit area, closer to the average luminance value aveLuma in the target unit area, with the following formula.

$$\text{MinMax} = (\text{aveLuma} - \text{minLuma}) < (\text{maxLuma} - \text{aveLuma}) ? \text{minLuma} : \text{maxLuma}$$

The block parameter deriver 5211 quantizes the value MinMax in the target unit area by M5 stages with the following formula, to derive a value MinMax'.

$$\text{MinMax'} = \text{Dir} + \text{MinMax}>>(\text{bitDepth} - \text{m5})$$

In the formula, m5 = log2(M5).
The block index deriver 5212 derives blockIdx based on the value MinMax' quantized as well as the direction Dir and the dynamic range dynamicRange' described above.

$$blockIdx = Dir + Md * dynamicRange' + (Md * M4) * MinMax$$

In the formula, M4 represents the number of stages of the quantization on the dynamic range.

In the example described above, the block index deriver 5212 derives the block index based on the value that is one of the maximum luminance value and the minimum luminance value in the target unit area closer to the average luminance value in the target unit area. The block index deriver 5212 may derive the block index of the target unit area based on the value that is one of the maximum luminance value and the minimum luminance value in the target unit area closer to the average luminance value in the target unit area based on at least one of the dynamic range, the direction, and the activity.

(Example-9 of processing of deriving block index)

The block parameter deriver 5211 may derive the block parameter based on color information about the target unit area, as the pixel value information about the target unit area. More specifically, the block parameter deriver 5211 maps the target unit area onto an appropriate color system. For example, the block parameter deriver 5211 may covert the color system of the target unit area from YCbCr into an HLS color system including hue H, luminance L, and saturation S.

An example of processing performed by the block parameter deriver 5211 for mapping the YCbCR color system onto the HLS color system is described below. First of all, the YCbCR color system is converted into the RGB color system with the following formula.

$$R = 1.164(Y-16) + 1.596(Cr-128)$$

$$G = 1.164(Y-16) - 0.391(Cb-128) - 0.813(Cr-128)$$

$$B = 1.164(Y-16) + 2.018(Cb-128)$$

Then, the RGB color system is converted into the HLS color system with the following formula.

$$H = \text{if } (max == min) \text{ undefined (chromatic)}$$
$$\text{else if } (max == R) \ 60 * (G-B)/(max - min);$$
$$\text{else if } (max == G) \ 60 * (B-R)/(max - min) + 120;$$
$$\text{else if } (max == B) \ 60 * (R-G)/(max - min) + 240;$$

$$L = (max + min)/2$$

$$S = max - min$$

In the formula, max = Max(R,G,B), and Max() is a function for selecting the maximum value of the arguments. min = Max(R,G,B), and Min() is a function for selecting the minimum value of the arguments.

The block parameter deriver 5211 quantizes the hue H in the target unit area after the conversion into the HLS color system by M stages. The block index deriver 5212 derives the block index blockIdx corresponding to the hue H with the following formula, based on the hue H after the quantization.

$$blockIdx = H * M / 360$$

An example of processing of converting CbCr into a simple hue is described as another example of the method of deriving the block parameter with a color system. The block parameter deriver 5211 first quantizes the hue of each of Cb and Cr by M stages with the following formula to derive a hue cbIdx for Cb and a hue crIdx for Cr.

$$cbIdx = (Cb * M)/(1 << bitDepthC)$$

$$crIdx = (Cr * M)/(1 << bitDepthC)$$

The block index deriver 5212 derives the block index blockIdx corresponding to the hue in the target unit area with the following formula, based on the hue cbIdx for Cb and the hue crIdx for Cr after the quantization.

$$blockIdx = cbIdx * M + crIdx$$

The hues of Cb and Cr may be quantized by M stages with a table chromaIdxTable[] including M indices (0, ... M-1), as follows.

$$cbIdx = chromaIdxTable[(Cb >> (bitDepthC-N))]$$

$$crIdx = chromaIdxTable[(Cr >> (bitDepthC-N))]$$

In this case, for example, the table chromaIdxTable[] with the number of elements (1<<N) is represented as follows assuming the M = 3 and N = 4.

$$chromaIdxTable[] = \{0,0,0,0,0,0,1,1,1,1,1,2,2,2,2,2\}$$

<Configuration of image encoding device>

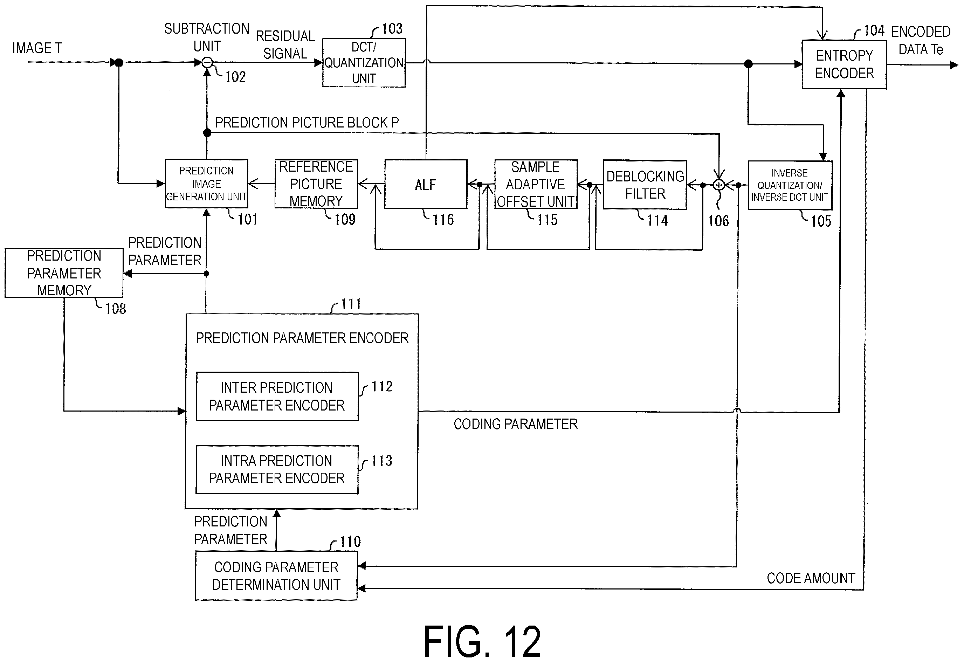

Next, a configuration of the image encoding device 11 according to the present embodiment is described. FIG. 12 is a schematic view illustrating a configuration of the image encoding device 11 according to the present embodiment. The image encoding device 11 includes a prediction image generation unit 101, a subtraction unit 102, a DCT/quantization unit 103, an entropy encoder 104, an inverse quantization/inverse DCT unit 105, an addition unit 106, a prediction parameter memory 108, a reference picture memory 109, a coding parameter determination unit 110, a prediction parameter encoder 111, a deblocking filter 114, a sample adaptive offset unit 115, and an ALF 116. The prediction parameter encoder 111 includes an inter prediction parameter encoder 112 and an intra prediction parameter encoder 113.

The prediction image generation unit 101 generates a prediction image for each PU obtained by dividing a CU that is an end node of the LUC, for an image T input from the outside. The prediction image generation unit 101 reads a reference picture from the reference picture memory 109 based on a prediction parameter input from the prediction parameter encoder 111. For example, the prediction parameter input from the prediction parameter encoder 111 is a motion vector. The prediction image generation unit 101 reads a block at a position indicating by the motion vector on the reference picture, with the PU serving as the start point. The prediction image generation unit 101 generates a prediction image of the PU by using one of a plurality of prediction schemes, for the block read. The prediction image generation unit 101 outputs the prediction image of the PU generated to the subtraction unit 102. The prediction image generation unit 101 operates in the same manner as the operation performed by the prediction image generation unit 308 described above, and thus how the prediction image of the PU is generated will not be described in detail.

The prediction image generation unit 101 selects the prediction scheme by selecting a prediction scheme achieving a smallest error value based on a difference between a pixel value of the PU in the image T and a pixel value of the prediction image of the PU, for example. The method of selecting the prediction scheme is not limited to this.

The plurality of prediction schemes includes intra prediction, motion prediction, and merge prediction. The motion direction is the inter prediction described above, and is prediction between pictures in the time direction. The merge prediction is prediction using a reference picture and the motion vector that are the same as those of a CU that has already been encoded and is within a predetermined range from the coding target CU.

Upon selecting the intra prediction, the prediction image generation unit 101 outputs the prediction mode IntraPredMode, indicating the intra prediction mode used for generating the prediction image of the PU, to the prediction parameter encoder 111.

Upon selecting the motion prediction, the prediction image generation unit 101 stores the motion vector mvLX used for generating the prediction image of the PU in the prediction parameter memory 108, and outputs the vector to the inter prediction parameter encoder 112. The motion vector mvLX indicates a change to the position of a block on the reference picture to be referred to for generating the prediction image of the PU, from the position of the PU. Information indicating the motion vector mvLX includes information indicating the reference picture (for example, the reference picture index refIdxLX and the picture order number POC). The prediction image generation unit 101 outputs the prediction mode predMode indicating the inter prediction mode to the prediction parameter encoder 111.

In a case where the merge prediction is selected, the prediction image generation unit 101 outputs a merge index merge_idx indicating the type of merge candidate selected, to the inter prediction parameter encoder 112.

The subtraction unit 102 subtracts a signal value of the prediction image of the PU input from the prediction image generation unit 101 from the pixel value of the image T input from the outside, to generate a residual signal. The subtraction unit 102 outputs the residual signal generated to the DCT/quantization unit 103 and the coding parameter determination unit 110.

The DCT/quantization unit 103 performs the DCT on the residual signal input from the subtraction unit 102, to calculate a DCT coefficient. The DCT/quantization unit 103 quantizes the DCT coefficient calculated, to obtain a quantization coefficient. The DCT/quantization unit 103 outputs the quantization coefficient obtained to the entropy encoder 104 and the inverse quantization/inverse DCT unit 105.

The entropy encoder 104 receives the quantization coefficient from the DCT/quantization unit 103 and receives the coding parameter from the coding parameter determination unit 110. Examples of the coding parameter input include the reference picture index refIdxLX, the prediction vector index mvp_LX_idx, the differential vector mvdLX, the prediction mode predMode, the merge index merge_idx, and the like.

The entropy encoder 104 performs entropy encoding on the quantization coefficient and the coding parameter input to generate a coding stream Te, and outputs the coding stream Te generated to the outside.

The inverse quantization/inverse DCT unit 105 performs inverse quantization on the quantization coefficient input from the DCT/quantization unit 103, to obtain the DCT coefficient. The inverse quantization/inverse DCT unit 105 performs the inverse DCT on the DCT coefficient obtained, to calculate a decoded residual signal. The inverse quantization/inverse DCT unit 105 outputs the decoded residual signal calculated, to the addition unit 106.

The addition unit 106 adds the prediction image of the PU input from the prediction image generation unit 101 with a decoded residual input from the inverse quantization/inverse DCT unit 105 for each pixel, to generate a decoded image. The addition unit 106 stores the decoded image generated in the reference picture memory 109.

The prediction parameter memory 108 stores the prediction parameter, generated by the coding parameter determination unit 110, at a predetermined position for each coding target picture and CU.

The reference picture memory 109 stores the decoded image, generated by the addition unit 106, at a predetermined position for each coding target picture and CU.

The coding parameter determination unit 110 selects one of a plurality of sets of coding parameters. The coding parameter includes the prediction parameter described above and a parameter to be a target of encoding, generated in association with the prediction parameter. The prediction image generation unit 101 uses each of these sets of coding parameters to generate the prediction image of the PU.

The coding parameter determination unit 110 calculates a cost value indicating an amount of information and an encoding error for each of the plurality of sets. The cost value is a sum of a code amount and a value obtained by multiplying a square error by a coefficient λ. The code amount is an amount of information about the coding stream Te obtained by the entropy coding on the quantization error and the coding parameter. The square error is a sum of squares of the pixels in the image T and in the decoded image stored in the reference picture memory 109. The coefficient λ is a predetermined actual number larger than zero. The coding parameter determination unit 110 selects a set of coding parameters resulting in the minimum cost value to be calculated. Thus, the entropy encoder 104 outputs the set of coding parameter selected as the coding stream Te to the outside, and does not output the set of coding parameters not selected.

The prediction parameter encoder 111 derives and encodes the prediction parameter used for generating the prediction image based on the parameter input from the coding parameter determination unit 110, to generate a set of coding parameters. The prediction parameter encoder 111 outputs the set of coding parameter generated to the entropy encoder 104.

The inter prediction parameter encoder 112 encodes the prediction parameter input from the coding parameter determination unit 110.

The intra prediction parameter encoder 113 determines the intra prediction mode IntraPredMode, input from the coding parameter determination unit 110, to be a set of inter prediction parameters.

The configurations of the deblocking filter 114 and the sample adaptive offset unit 115 are respectively the same as those of the deblocking filter 313 and sample adaptive offset unit 314, and thus the description thereof will be omitted.

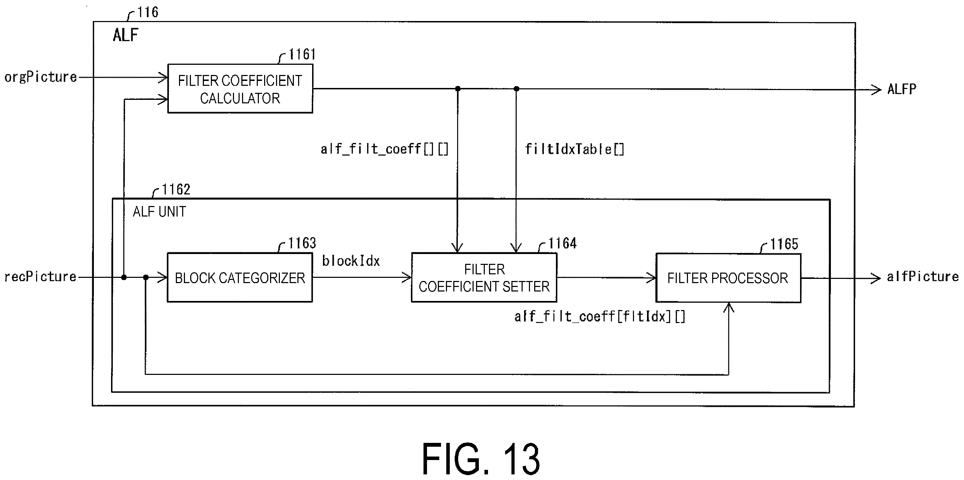

FIG. 13 is a block diagram illustrating a configuration of the ALF 116. As illustrated in FIG. 13, the ALF 116 includes a filter coefficient calculator 1161 and an ALF unit 1162.

The ALF 116 uses the image T (orgPicture) and the ALF-unperformed decoded image recPicture as inputs, and outputs a filtered decoded image alfPicutre.

The filter coefficient calculator 1161 uses the image orgPicture and the ALF-unperformed decoded image recPicture as inputs, and outputs the ALF filter coefficient alf_filt_coeff[][] and the filter index table filtIdxTable[] to the ALF unit 1162 and the entropy encoder (not illustrated).

More specifically, the filter coefficient calculator 1161 performs the following processing.

(Step 1)

The filter coefficient calculator 1161 derives the block index of each target unit area in the ALF-unperformed decoded image recPicture with a method similar to that performed by the block categorizer 521.

(Step 2)

The filter coefficient calculator 1161 derives the filter coefficient achieving the minimum error with respect to the image orgPicture for each classification of the target unit area. The least squares method may be used for deriving the filter coefficient.

(Step 3)

The filter coefficient calculator 1161 derives the filter index table filtIdxTable[]. Basically, the filter index table filtIdxTable[] is derived to provide the same value as the argument (block index blockIdx). Note that in a case where the same filter coefficient exists, the filter index table filtIdxTable[] is derived for the block index blockIdx corresponding to the filter coefficient to provide the same value. Thus, the filter coefficient needs not to be redundantly encoded.

(Step 4)

The filter coefficient calculator 1161 outputs the ALF filter coefficient alf_filt_coeff[][] and the filter index table filtIdxTable[] derived to the ALF unit 1162 and the entropy encoder.

The configurations of the block categorizer 1163, the filter coefficient setter 1164, and the filter processor 1165 of the ALF unit 1162 are respectively the same as those of the block categorizer 521, the filter coefficient setter 524, and the filter processor 525 of the ALF unit 52, and thus the description thereof is omitted.

Second Embodiment

In the present embodiment, a category index category _idx is used for implementing a different method of deriving a block index of each target unit area of the ALF-unperformed decoded image recPicture. More specifically, the category index category_idx indicating the method of deriving the block index blockIdx of each target unit area is included in the ALF parameter ALFP in the slice header SH of the encoded data Te. The ALF parameter ALFP includes the filter index table filtIdxTable[][] corresponding to the category index category _idx and the block index blockIdx.

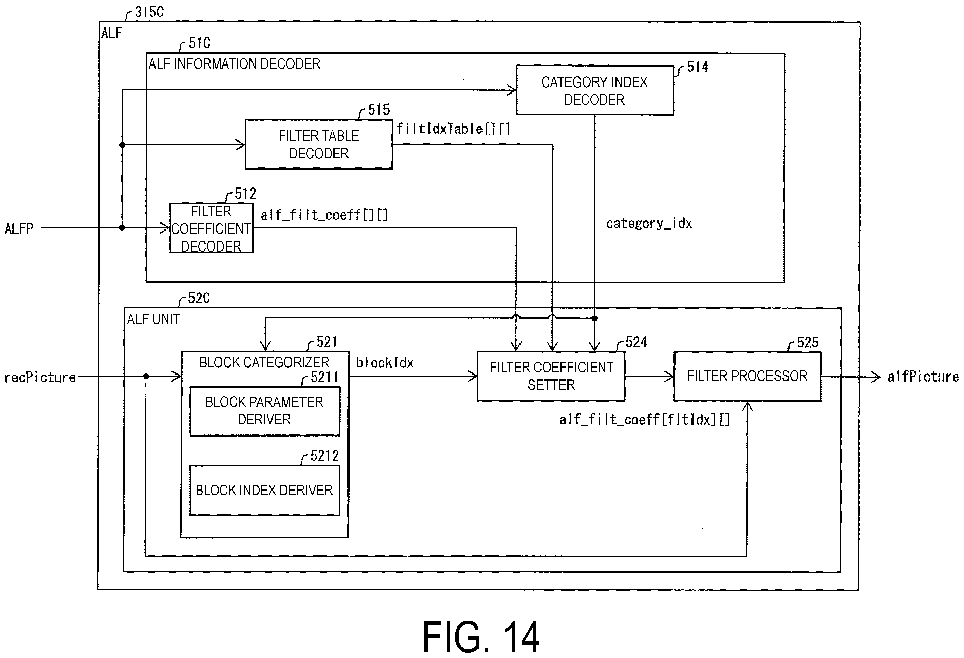

FIG. 14 is a block diagram illustrating a configuration of an ALF 315C included in an image decoding device according to the present embodiment. FIG. 14 is a figure as a result of adding a category index decoder 514 (category index determination unit) to FIG. 7. The category index decoder 514 decodes the category index category_idx. The block index deriver 5212 derives the block index blockIdx of the target unit area through the method indicated by the category index category _idx derived.

(Image decoding processing)

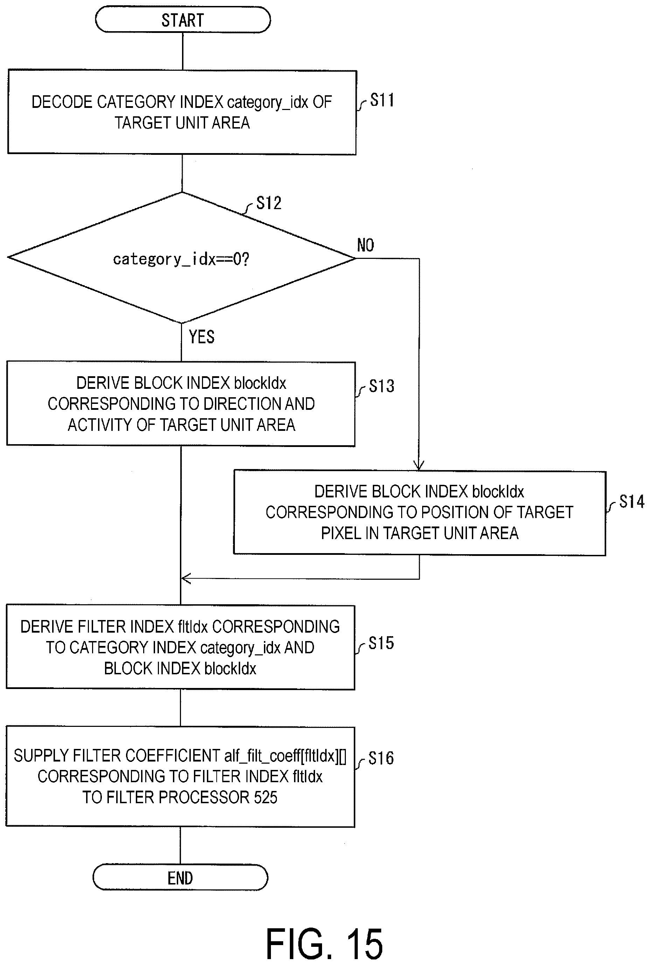

A specific example of image decoding processing performed in the present embodiment is described with reference to FIG. 15. FIG. 15 is a flowchart of processing from the deriving of a category index to supply of a filter coefficient to a filter processor 525, providing two category indices category_idx(0,1) in this example. The specific example of the image decoding processing performed in the present embodiment is not limited to this.

The category index decoder 514 decodes the category index category _idx of the target unit area based on the ALF parameter ALFP in the encoded data Te (S11).

In a case where the category index category_idx is 0 (S12, Yes), the block categorizer 521 derives the block index blockIdx based on the method performed in the case where the category index category_idx is 0 (S13). For example, the block index blockIdx is derived with the method according to the first embodiment, based on the direction, the activity, and the pixel value information in the target unit area.

In a case where the category index category_idx is 1 (S12, No), the block categorizer 521 derives the block index blockIdx based on the method performed in the case where the category index category_idx is 1 (S14). For example, the block index blockIdx corresponding to coordinates (for example upper left coordinates of the block) of the target block in the target unit area. More specifically, in a case where the ALF-unperformed decoded image recPicture is divided into M x N areas, the block categorizer 521 derives the block index blockIdx in accordance with an area where the upper left pixel (x,y) of the block is positioned determined with the following formula.

$$blockIdx = ((x * M)/picWidth) * N + ((y * N)/picHeight)$$

In the formula, picWidth represents the width of the ALF-unperformed decoded image recPicture, and picHeight represents the height of the ALF-unperformed decoded image recPicture.

Alternatively, the block categorizer 521 may derive the block index blockIdx in accordance with the position of the upper left coordinates (x,y) of the target block through shift calculation as in the following formula.

$$blockIdx = ((x * M) >> Ceil(log2(picWidth))) << log2(N) + (y *$$
$$N) >> Ceil(log2(picHeight))$$

In the formula, Ceil represents a function of outputting an integer by rounded up to the decimal point.

The filter coefficient setter 524 reads the filter index table filtIdxTabl[][] from the filter table decoder 515, and derives the filter index fltIdx by referring to the category index category_idx and the block index blockIdx (S15).

$$fltIdx = filtIdxTabl[category\_idx][blockIdx]$$

The filter coefficient setter 524 supplies the filter coefficient corresponding to the filter index fltIdx derived, to the filter processor 525 (S16).

The filter processor 525 performs filter processing by using the filter coefficient alf_filt_coeff[fltIdx][], supplied from the filter coefficient setter 524, on each pixel in the target uni area. Thus, the filter processor 525 generates the ALF-filtered decoded image alfPicture in the target unit area.

With the configuration described above, a different method of deriving a block index of each target unit area of the ALF-unperformed decoded image recPicture can be implemented by deriving the category index of each target unit area.

The table fltIdxTable[][] for deriving the filter index fltIdx from the block index blockIdx may be different for each category index category _idx. Specifically, fltIdxTable[] may be used in a case where category index category_idx = 0, and fltIdxTable1[] may be used in a case where category index category _idx = 1.

(Example of processing of deriving block index)

Another example of the processing of deriving the filter index fltIdx performed by the filter coefficient setter 524 is described below.

First of all, the block parameter deriver 5211 derives the category index category_idx of the target unit area based on the ALF parameter ALFP in the encoded data Te.

In the case where the category index category _idx derived is 0, the block parameter deriver 5211 derives the block index blockIdx corresponding to the direction, the activity, and the pixel value information in the target unit area from 0, ... M1-1 block indices.

On the other hand, in a case where the category index category_idx derived is 1, the block parameter deriver 5211 derives the block index blockIdx corresponding to the position of the target unit area from 0, ... M2-1 block indices. In this process, the block parameter deriver 5211 adds a predetermined offset value (M1 in the present example) to the block index blockIdx derived to derive the block indices blockIdx M1, ... M2-1+M1.

The predetermined offset value is an offset value corresponding to the category index category_idx, and is a sum of the block indices blockIdx in 1 to N-1 category indices category _idx, in a case where the number of categories of the category indices category_idx is L and the category index category_idx is N (N <= L). Thus, in this example (in the example where category _idx is 1), the offset value corresponds to the number of categories of the block index blockIdx in the case where the category index category _idx is 0.

Thus, the category index category_idx corresponding to the block indices blockIdx of 0 to M1-1 is allocated to 0, and the category index category_idx corresponding to the block indices blockIdx of M1 to M2-1+M1 is allocated to 1. Thus, the block indices blockIdx can be of serial numbers over the two category indices category _idx, so that only a single filter index table filtIdxTable[] indicating association between the block index blockIdx and the filter index fltIdx is required. Thus, the ALF parameter ALFP needs not to include the filter index table filtIdxTable[] for each category index category _idx.

<Configuration of image encoding device>

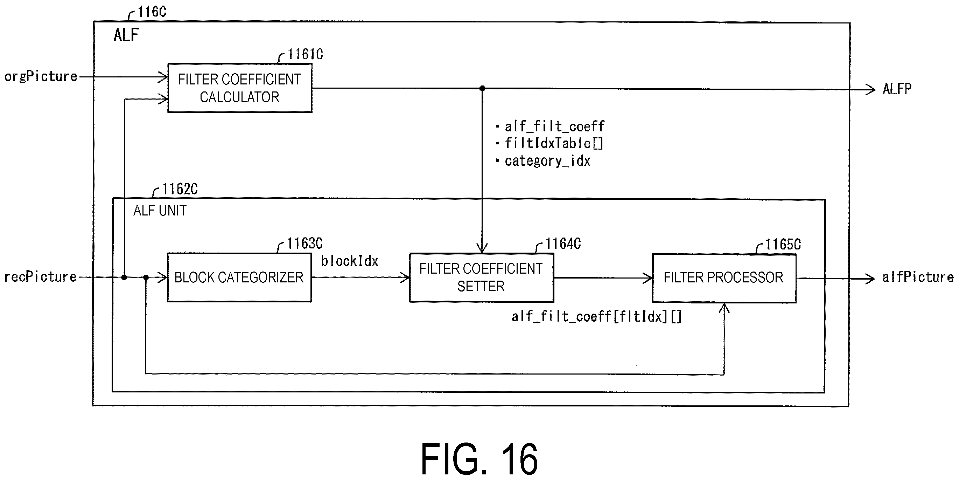

FIG. 16 illustrates an ALF 116C included in the encoding device according to the present embodiment. As illustrated in FIG. 16, the ALF 116C includes a filter coefficient calculator 1161C and an ALF unit 1162C.

The filter coefficient calculator 1161C uses the image T(orgPicture) and the ALF-unperformed decoded image recPicture as inputs, and outputs the ALF filter coefficient alf_filt_coeff[][] and the filter index table filtIdxTable[][] as well as the category index category _idx to the ALF unit 1162 and the entropy encoder (not illustrated).

More specifically, the filter coefficient calculator 1161C performs the following processing.

(Step 1)

The filter coefficient calculator 1161C sets the number i of the category index category_idx to 0.

(Step 2)

The filter coefficient calculator 1161C derives the block index blockIdx of each target unit area in the ALF-unperformed decoded image recPicture through a classification method corresponding to a case where the category index category _idx is i.

(Step 3)

The filter coefficient calculator 1161C derives the filter coefficient achieving the minimum error with respect to the image orgPicture for each classification of the target unit area. The least squares method may be used for deriving the filter coefficient.

(Step 4)

The filter coefficient calculator 1161C derives a filter index table filtIdxTable[i][]. Basically, the filter index table filtIdxTable[i][] is derived to provide the same value as the argument (block index blockIdx). Note that in a case where a plurality of block indices blockIdx indicates the same filter coefficient, the filter index table filtIdxTable[i][] is derived so that the same value is provided for the plurality of block indices blockIdx.

(Step 5)

The filter coefficient calculator 1161C adds 1 to i, and the processing returns to Step 2 in a case where i <= 1. On the other hand, the processing proceeds to step 6 in a case where i = 2.

(Step 6)

The filter coefficient calculator 1161C calculates the encoding cost for each i. A Rate-Distortion function may be used for calculating the encoding cost.

(Step 7)

The filter coefficient calculator 1161C outputs the filter coefficient alf_filt_coeff[][], the filter index table filtIdxTable[], and the category index category_idx corresponds to i resulting in the minimum encoding cost to the ALF unit 1162C and the entropy encoder.

The configurations of the block categorizer 1163C, the filter coefficient setter 1164C, and the filter processor 1165C of the ALF unit 1162C are respectively the same as those of the block categorizer 521, the filter coefficient setter 524, and the filter processor 525 of the ALF unit 52C, and thus the description thereof is omitted.

Third Embodiment

In the present embodiment, a technique for improving filter processing performance by encoding and decoding a filter coefficient in a unit of LCU instead of slice. In this case, a buffer for storing used filter coefficients is provided to prevent the code amount of the filter coefficient from increasing. In a case where a filter used for a certain LCU is stored in the buffer, a filter coefficient is not encoded, but information indicating the position of the filter coefficient is encoded. Thus, the code amount of the filter coefficient can be reduced.

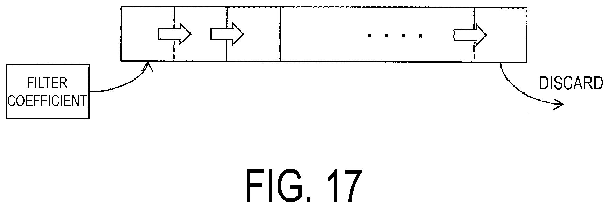

FIG. 17 is a schematic view of the buffer. In a case where the buffer is full, a new filter coefficient is stored in the buffer with the oldest filter coefficient stored discarded, as illustrated in FIG. 17. Unfortunately, the configuration where the oldest filter coefficient stored is discarded might result in the filter coefficient used for the target unit area with a similar feature as the target unit area discarded. In particular, the filter coefficient used for the target unit area positioned one the upper side of the target unit area is discarded.

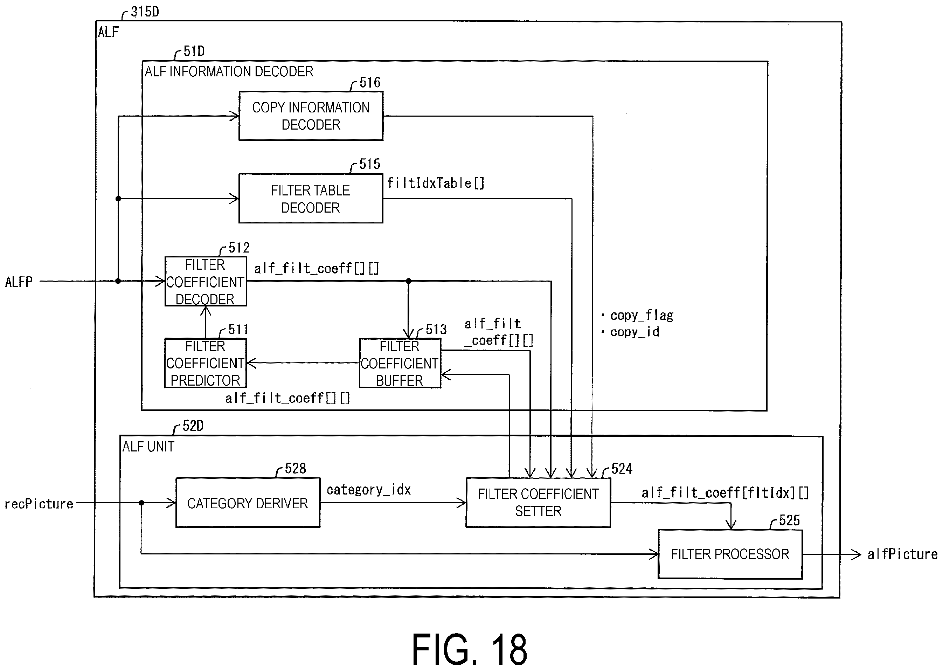

In view of this, in the present embodiment, a filter coefficient is written to a category area, in the buffer, corresponding to the category index category_idx of each target unit area. FIG. 18 is a block diagram illustrating a configuration of an ALF 315D included in the image decoding device according to the present embodiment. FIG. 18 is a figure obtained by adding a filter coefficient predictor 511, a filter coefficient buffer 513, and a copy information decoder 516 to FIG. 7 and replacing the block categorizer 521 with a category deriver 528 (category index deriver).

The copy information decoder 516 decodes a flag copy_flag indicating whether to refer to the ALF filter coefficient stored in the filter coefficient buffer 513, based on the ALF parameter ALFP included in the encoded data Te. In a case where the flag copy_flag is 1, the copy information decoder 516 decodes an index copy id specifying the filter coefficient alf_filt_coeff[] stored in the filter coefficient buffer 513, based on the ALF parameter ALFP.

The filter coefficient decoder 512 decodes the filter coefficient alf_filt_coeff[] included in ALFP. The filter coefficient alf_filt_coeff[] decoded is supplied to the filter coefficient setter 524.

The category deriver 528 derives the category index of a target unit area by using a block parameter (the direction, the activity, and a pixel value such as pixel information) of the target unit area. A method of deriving the index is described later in detail. In the description below, the LCU is used as the target unit area. However, the target unit area according to the present embodiment is not limited to the LCU.

In a case where the flag copy_flag decoded by the copy information decoder 516 is 1, the filter coefficient setter 524 reads a filter coefficient fltCoeffBuf[category_idx][copy_id][] specified by the index copy_id decoded by the copy information decoder 516 and the category index category_idx derived by the category deriver 528, and substitutes the coefficient into the filter coefficient alf_filt_coeff[]. The filter coefficient alf_filt_coeff[] is supplied to the filter processor 525.

On the other hand, in a case where the flag copy_flag decoded by the copy information decoder 516 is 0, the filter coefficient setter 524 supplies alf_filt_coeff[] decoded by the filter coefficient decoder 512 to the filter processor 525, and stores alf_filt_coeff[] in the filter coefficient buffer 513 by referring to the category index category _idx derived by the category deriver 528.

FIG. 17 is a schematic view of the coefficient buffer 513 according to the present embodiment. The filter coefficient buffer 513 (filter coefficient storage) is a buffer for managing and storing a filter coefficient for each category index category_idx as illustrated in FIG. 17. The filter coefficient setter 524 writes a filter coefficient newly decoded when the filter coefficient decoder 512 to a category area indicated by the category index category _idx derived by the category deriver 528. In a case where the category area indicated by the category index category_idx is full, the new filter coefficient is written with the oldest filter coefficient written to the category area discarded. How the buffer is managed is described in detail later.

(Image decoding processing)

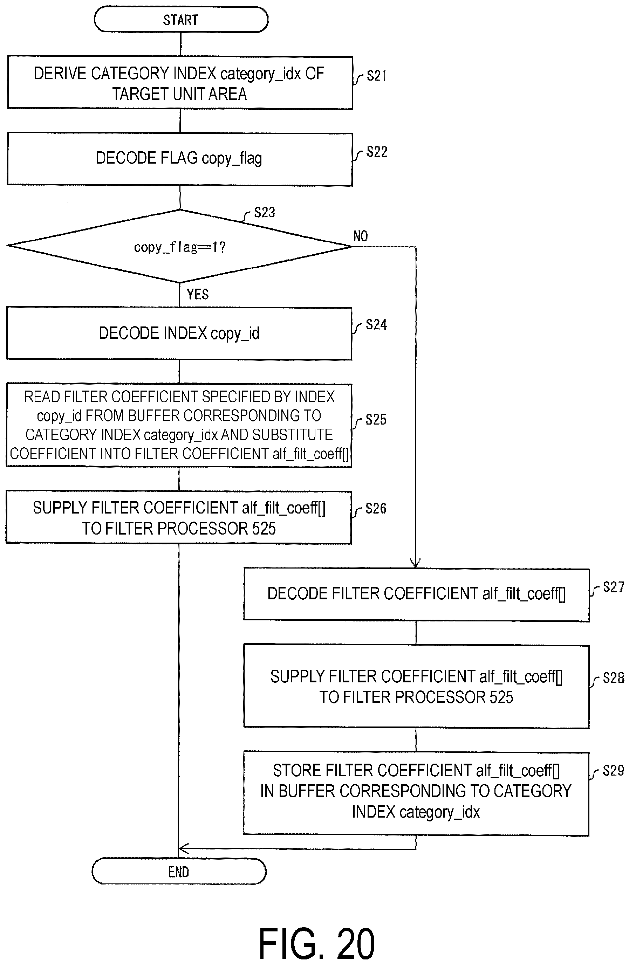

A specific example of filter processing performed in the present embodiment is described below with reference to FIG. 20. FIG. 20 is a flowchart of processing from the deriving of a category index to storage of a filter coefficient in the filter coefficient buffer. The specific example of the image decoding processing performed in the present embodiment is not limited to this.

First of all, the category deriver 528 derives the category index category _idx corresponding to a block parameter for a ALF-unperformed decoded image recPicture in a target LCU that is the target unit area (S21). The method of deriving the category index is only different from the methods of deriving the block index according to the first and the second embodiments in the target unit area (LCU in the present embodiment).

The copy information decoder 516 decodes the flag copy_flag indicating whether to refer to the ALF filter coefficient stored in the filter coefficient buffer 513, based on the ALF parameter ALFP included in the encoded data Te (S22). In a case where the flag copy_flag is 1 (S23, Yes), the copy information decoder 516 decodes an index copy_id specifying the filter coefficient to be referred, based on the ALF parameter ALFP (S24).

In a case where the flag copy_flag decoded by the copy information decoder 516 is 1, the filter coefficient setter 524 reads a filter coefficient fltCoeffBuf[category_idx][copy_id][] specified by the index copy id decoded by the copy information decoder 516 from the buffer corresponding to the category index category _idx derived by the category deriver 528, in the filter coefficient buffer 513, and substitutes the coefficient into the filter coefficient alf_filt_coeff[] (S25).

$$alf\_filt\_coeff[] = fltCoeffBuf[category\_idx][copy\_id][]$$

Then, the filter coefficient setter 524 supplies the filter coefficient alf_filt_coeff[] to the filter processor 525 (S26).

On the other hand, in a case where the flag copy_flag decoded by the copy information decoder 516 is 0 (S23, No), the filter coefficient decoder 512 decodes the filter coefficient alf_filt_coeff[] from the ALF parameter ALFP (S27). Then, the filter coefficient setter 524 supplies the filter coefficient alf_filt_coeff[] to the filter processor 525 (S28).

The filter coefficient setter 524 stores the filter coefficient alf_filt_coeff[] in a buffer corresponding to the category index category_idx derived by the category deriver 528, in the filter coefficient buffer 513 (S29).

The filter processor 525 performs filter processing using the filter coefficient alf_fil_coeff[], on each pixel in the target LCU. Thus, the filter processor 525 generates the ALF-filtered decoded image alfPicture in the target LCU.

With the Configuration described above, the filter coefficient is updated for each buffer corresponding to a category index of each target unit area. Thus, the filter coefficient corresponding to a category with which the filter coefficient in a buffer is frequently referred to can be prevented from being discarded due to storage of a filter coefficient corresponding to a category with which a filter coefficient in the buffer is not frequently referred to. As a result, the filter corresponding to the category with which the filter coefficient in the buffer is frequently referred to is more likely to remain in the buffer.

(Example of processing of deriving category index)

An example of processing of deriving a category index is described below.

The category deriver 528 derives a category index with a method that is the same as that performed by the block parameter deriver 5211 described above. For example, in a case where the block parameter is an average luminance value, the filter coefficients are categorized into M0 categories based on the average luminance value avgLuma of the LCU. The method of deriving the category index is as follows.

$$category\_idx = avgLuma >> (bitDepth - m0)$$

In the formula, m0 = log2(M0).

The filter coefficient setter 524 stores the filter coefficient decoded by the filter coefficient decoder 512 in a buffer specified by the category index category _idx, in the filter coefficient buffer 513 including buffers the number of which is the same as the number of category indices. The filter coefficient fitCoeffBuf[category_idx][copy_id][] indicated by the index copy id is read from the buffer specified by the category index category_idx, in the filter coefficient buffer 513.

As an alternative method for deriving a category index, for example, the entire picture may be set as the target unit area and divided into N0 areas along the horizontal direction. In such a case, the category deriver 528 derives the category index category_idx with the following formula.

$$category\_idx = (x * N0)/picWidth$$

In the formula, x represents an x coordinate at the leftmost the areas divided along the horizontal direction.

Alternatively, the category deriver 528 calculate the category index category_idx through shift calculation represented by the following formula.

$$category\_idx = x >> (Ceil(log2(picWidth)) >> n0)$$

In the formula, n0 = log2(N0).

(Filter coefficient prediction residual)

In the examples described above, the filter coefficient itself, used in the ALF processing, is encoded. However, an aspect of the present invention is not necessarily limited to these examples. An example where a difference value with respect to a filter coefficient stored in the filter coefficient buffer 513 is described below. In this case, the code amount can be more effectively reduced compared with the case where the filter coefficient itself is encoded.

In the present embodiment, the ALF parameter ALFP includes a prediction index pred_idx specifying a filter to be used as a prediction value in filter coefficients stored in the filter coefficient buffer 513, and a filter coefficient prediction residual alf_filt_res[].

The filter coefficient decoder 512 decodes the filter coefficient prediction residual alf_filt_res[] and the prediction index pred_idx. The filter coefficient decoder 512 supplies the prediction index pred_idx to the filter coefficient setter 524, and supplies the filter coefficient prediction residual alf_filt_res[] to the filter coefficient predictor 511.

The filter coefficient setter 524 selects the filter coefficient used as the prediction value, in the filter coefficients stored in the filter coefficient buffer 513, by using the prediction index pred_idx and the category index category _idx derived by the category deriver 528. The prediction value predAlfFiltCoeff[] of the filter coefficient is represented by the following formula.

$$predAlfFiltCoeff[] = fltCoeffBuf[category\_idx][pred\_idx][]$$

The filter coefficient setter 524 supplies the prediction value predAlfFiltCoeff[] to the filter coefficient predictor 511.

The filter coefficient predictor 511 takes the sum of the filter coefficient residual alf_filt_res[] and the prediction filter coefficient predAlfFilt_Coeff[] to generate the filter coefficient alf_filt_coeff[]. The filter coefficient alf_filt_coeff[] generated is supplied to the filter coefficient setter 524 via the filter coefficient decoder 512.

The filter coefficient setter 524 stores the filter coefficient alf_filt_coeff[] in a buffer corresponding to the category index category _idx derived by the category deriver 528, in the buffers of the filter coefficient buffer 513.

The processing thereafter is the same as that in the examples of the processing of deriving a block index according to the first and the second embodiment described above.

With the filter coefficient thus encoded in the unit of LCU, accuracy of the ALF can be improved while preventing the code amount of the filter coefficient from increasing, compared with the case where a filter coefficient is encoded for each slice.

(FIFO Configuration)

The filter coefficient buffer 513 may be a First In First Out (FIFO) buffer or may be a ring buffer.

A method of storing a filter coefficient in a case where the filter coefficient buffer 513 is a FIFO buffer is described below.

First of all, the category deriver 528 derives the category index category_idx corresponding to the block parameter for the ALF-unperformed decoded image recPicture in the target LCU that is the target unit area. More specifically, the category deriver 528 quantizes the block parameter by M0 stages to derive the category index category _idx.

$$category\_idx = block\ parameter >> (log2(Range) - log2(M0))$$

In the formula, Range represents a range (0, ... Range-1) of the block parameters.

In a case where the flag copy_flag decoded by the copy information decoder 516 is 1, the filter coefficient setter 524 reads a filter coefficient specified by the index copy_id decoded by the copy information decoder 516 from the buffer corresponding to the category index category _idx derived by the category deriver 528, in the filter coefficient buffer 513, and substitutes the coefficient into the filter coefficient alf_filt_coeff[].

$$alt\_filt\_coeff[i] = fltCoeffBuf[category\_idx][copy\_id][i](i = 0, ...NTAP-1)$$

In the formula, NTAP represents the number of taps.

The filter coefficient setter 524 supplies the filter coefficient alf_filt_coeff[] to the filter processor 525.

On the other hand, in a case where the flag copy_flag decoded by the copy information decoder 516 is 0 (S23, No), the filter coefficient decoder 512 decodes the filter coefficient alf_filt_coeff[] from the ALF parameter ALFP. The filter coefficient setter 524 supplies the filter coefficient alf_filt_coeff[] to the filter processor 525.

The filter coefficient setter 524 updates the filter coefficient in the filter coefficient buffer 513. More specifically, first of all, the filter coefficient setter 524 shifts a filter coefficient in a buffer corresponding to the category index category_idx derived by the category deriver 528, in buffers fltCoeffBuf of the filter coefficient buffer 513, backward one by one.

$$\text{fltCoeffBuf}[\text{category\_idx}][j+1][i] = \text{fltCoeffBuf}[\text{category\_idx}][j][i](i = 0, \ldots \text{NTAP-1})$$

In the formula, j = buffer size bufSize-2;j>=0;j--, and the filter coefficient alf_filt_coeff[] represents a unit of the buffer size bufSize.

The filter coefficient setter 524 stores the filter coefficient alf_filt_coeff[] at the head of a buffer corresponding to the category index category _idx derived by the category deriver 528, in buffers fltCoeffBuf of the filter coefficient buffer 513.

$$\text{fltCoeffBuf}[\text{category\_idx}][0][i] = \text{alf\_filt\_coeff}[i](i = 0, \ldots \text{NTAP-1})$$

(Ring buffer configuration)

Next, a method of storing a filter coefficient in a case where the filter coefficient buffer 513 is a ring buffer is described.

First of all, the category deriver 528 derives the category index category _idx corresponding to the block parameter for the ALF-unperformed decoded image recPicture in the target LCU that is the target unit area. More specifically, the category deriver 528 quantizes the block parameter by M0 stages to derive the category index category _idx.

$$\text{category\_idx} = \text{block parameter} >> (\log2(\text{Range}) - \log2(\text{M0}))$$

In the formula, Range represents a range (0, ... Range-1) of the block parameters.

In a case where the flag copy_flag decoded by the copy information decoder 516 is 1, the filter coefficient setter 524 derives a read position readPos of the filter coefficient specified by the index copy id decoded by the copy information decoder 516, in the buffer corresponding to the category index category_idx derived by the category deriver 528, in the buffers fltCoeffBuf of the filter coefficient buffer 513.

$$\text{readPos} = (\text{readPos-copy\_id}) \& (\text{bufSize-1})$$

The filter coefficient setter 524 reads the filter coefficient at the read position readPos from the buffer corresponding to the category index category_idx derived by the category deriver 528, in the buffers fltCoeffBuf of the filter coefficient buffer 513, and substitutes the filter coefficient into the filter coefficient alf_filt_coeff[].

$$\text{alt\_filt\_coeff}[i] = \text{fltCoeffBuf}[\text{category\_idx}][\text{readPos}][i](i = 0, \ldots \text{NTAP-1})$$

On the other hand, in a case where the flag copy_flag decoded by the copy information decoder 516 is 0 (S23, No), the filter coefficient decoder 512 decodes the filter coefficient alf_filt_coeff[] from the ALF parameter ALFP. The filter coefficient setter 524 supplies the filter coefficient alf_filt_coeff[] to the filter processor 525.

The filter coefficient setter 524 updates the filter coefficient in the filter coefficient buffer 513. More specifically, the filter coefficient setter 524 first updates a write position writePos in the buffer corresponding to the category index category _idx derived by the category deriver 528, in the buffers fltCoeffBuf of the filter coefficient buffer 513.

$$\text{writePos} = (\text{writePos+1}) \& (\text{bufSize-1})$$

The filter coefficient setter 524 stores the filter coefficient alf_filt_coeff[] in a current position writePos in the buffer corresponding to the category index category _idx derived by the category deriver 528, in the buffers fltCoeffBuf of the filter coefficient buffer 513.

$$\text{fltCoeffBuf}[\text{category\_idx}][\text{writePos}][i] = \text{alf\_filt\_coeff}[i](i = 0, \ldots \text{NTAP-1})$$

<Configuration of image encoding device>

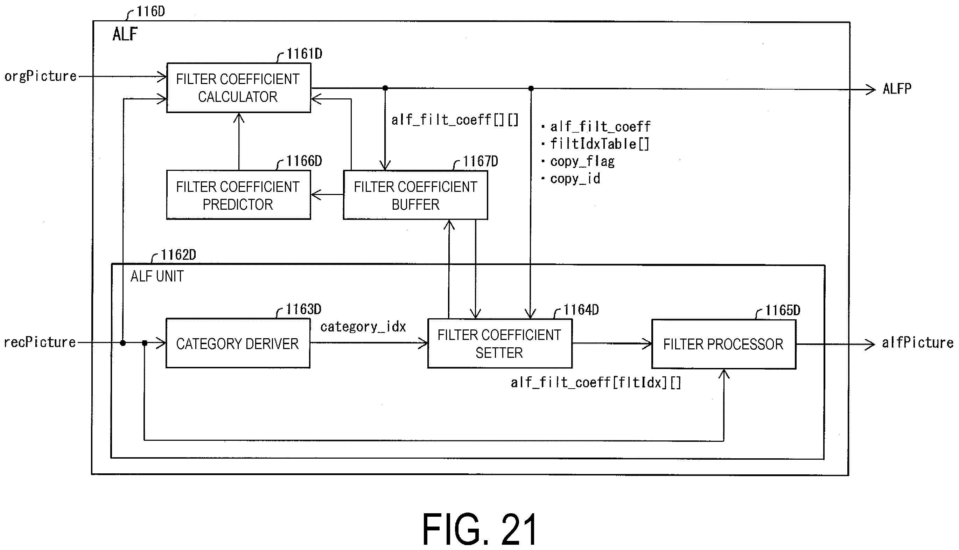

FIG. 21 illustrates an ALF 116D included in the encoding device according to the present embodiment. As illustrated in FIG. 21, ALF 116D includes a filter coefficient calculator 1161D, an ALF unit 1162D, a filter coefficient predictor 1166D, and a filter coefficient buffer 1167D.
The filter coefficient calculator 1161D uses the image T (orgPicture) and the ALF-unperformed decoded image recPicture as inputs and outputs the ALF filter coefficient alf_filt_coeff[][] and the filter index table filtIdxTable[] as well as the flag copy_flag and the index copy_id to the ALF unit 1162D and the entropy encoder (not illustrated).
More specifically, the filter coefficient calculator 1161D performs the following processing.

(Step 1)

The filter coefficient calculator 1161D calculates a filter coefficient achieving a minimum error with respect to the image orgPicture, for each target unit area. The least squares method may be used for deriving the filter coefficient.

(Step 2)

The filter coefficient calculator 1161D calculates the encoding cost. A Rate-Distortion function may be used for calculating the encoding cost.

(Step 3)

The filter coefficient calculator 1161D derives the category index category _idx corresponding to the block parameter for the target LCU that is the target unit area.

(Step 4)

The filter coefficient calculator 1161D reads a plurality of filter coefficients fltCoeffBuf[category_idx][][] specified by the category index category _idx, and calculates each encoding cost in a case where each filter coefficient is applied to the target unit area.

(Step 5)

The filter coefficient calculator 1161D compares the encoding costs, calculated in Steps 2 and 4, with each other.

(Step 5-1)

In a case where the minimum value is achieved with the encoding cost calculated in Step 2, the filter coefficient calculator 1161D sets the flag copy_flag to 0, and outputs the filter coefficient alf_filt_coeff[] to the filter coefficient buffer 1167D (fltCoeffBuf[category_idx][][]).

(Step 5-2)

In a case where the minimum value is achieved with any of the encoding costs calculated in Step 4, the filter coefficient calculator 1161D sets the flag copy_flag to 1, and sets the index copy_id to an index indicating the corresponding filter coefficient in the filter coefficient buffer 1167D.

(Step 6)

The filter coefficient calculator 1161D outputs the filter coefficient alf_filt_coeff[], the flag copy_flag, and the index copy_id to the ALF unit 1162D and the entropy encoder.

Th configurations of the category deriver 1163D, the filter coefficient setter 1164D, the filter processor 1165D of the ALF unit 1162D as well as the filter coefficient predictor 1166D and the filter coefficient buffer 1167D are respectively the same as those of the category deriver 528, the filter coefficient setter 524, and the filter processor 525 of the ALF unit 52D as well as the filter coefficient predictor 511 and the filter coefficient buffer 513, and thus the description thereof is omitted herein.

The embodiment of the present invention has been described in detail above referring to the drawings, but the specific configuration is not limited to the above embodiments and various amendments can be made to a design that fall within the scope that does not depart from the gist of the present invention.

[Application example]

The image encoding device 11 and the image decoding device 31 can be installed in various apparatuses that transmits, receives, records, and plays a video. The video may be a natural video captured by a camera and the like, or may be an artificial video (including computer graphics (CG) and a graphic user interface (GUI)).

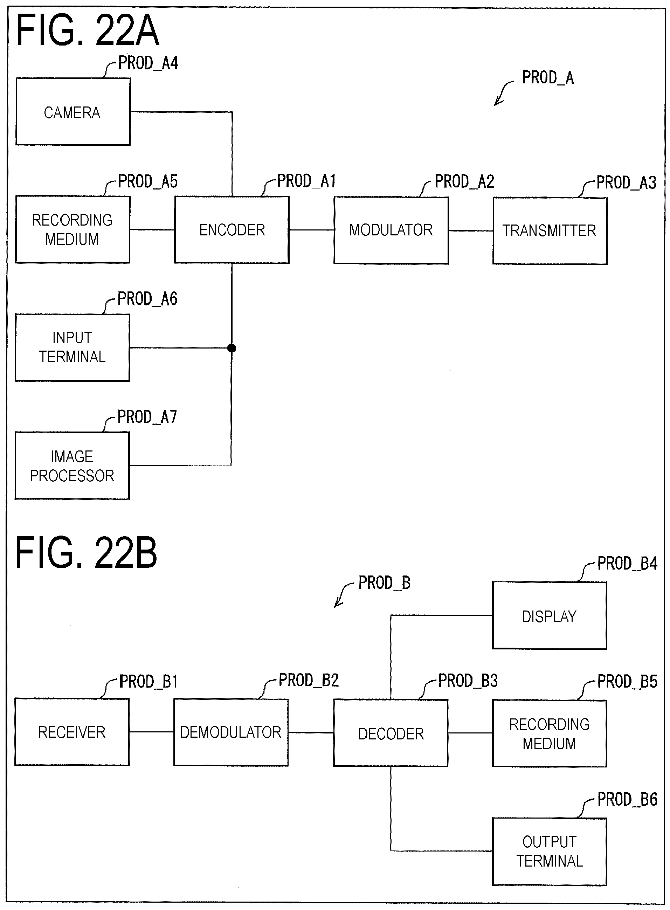

First of all, how the image encoding device 11 and the image decoding device 31 described above can be used for transmitting/receiving a video is described with reference to FIGS. 22A and 22B.

FIG. 22A is a block diagram illustrating a configuration of a transmission device PROD A incorporating the image encoding device 11. As illustrated in FIG. 22A, a transmission device PROD A includes an encoder PROD_A1 that encodes a video to obtain encoded data, a modulator PROD_A2 that modulates carrier waves with the encoded data obtained by the encoder PROD_A1 to obtain a modulation signal, and a transmitter PROD_A3 that transmits the modulation signal obtained by the modulator PROD_A2. The image encoding device 11 is used as the encoder PROD_A1.

The transmission device PROD A may further include a source of the video input to the encoder PROD_A1 including: a camera PROD_A4 that captures a video; a recording medium PROD_A5 that records a video; an input terminal PROD A6 through which a video is input from the outside; and an image processor A7 that generates and processes an image. FIG. 22A illustrates a configuration where the transmission device PROD A includes all of these components as an example. Note that a part of these components may be omitted.

The recording medium PROD_A5 may record a video that is not encoded, or a video encoded with an encoding scheme for recording different from an encoding scheme for transmission. In the latter case, a decoder (not illustrated) that decodes the encoded data read from the recording medium PROD_A5, based on the encoding scheme for recoding, may be interposed between the recording medium PROD_A5 and the encoder PROD_A1.

FIG. 22B is a block diagram illustrating a configuration of a reception device PROD_B incorporating the image decoding device 31. As illustrated in FIG. 22B, the reception device PROD B includes a receiver PROD_B1 that receives a modulation signal, a demodulator PROD_B2 that demodulates the modulation signal received by the receiver PROD_B1 to obtain encoded data, and a decoder PROD B3 that decodes the encoded data obtained by the demodulator PROD_B2 to obtain a video. The image decoding device 31 described above is used as this decoder PROD_B3.

The reception device PROD_B may further include, as targets to which the decoder PROD_B3 outputs a video, a display PROD_B4 that displays an image, a recording medium PROD_B5 that records a video, and an output terminal PROD B6 that outputs a video to the outside. FIG. 22B illustrates a configuration where the reception device PROD_B includes all of these components as an example. Note that some of these components may be omitted.

The recording medium PROD_B5 may record a video that is not encoded, or a video encoded with an encoding scheme for recording different from an encoding scheme for transmission. In the latter case, an encoder (not illustrated) that encodes a video acquired from the decoder PROD_B3, based on the encoding scheme for recoding, may be interposed between the decoder PROD_B3 and the recording medium PROD B5.

A transmission medium through which the modulation signal is transmitted may be a wireless medium or a wired medium. A transmission mode for transmitting a modulation signal may be broadcasting (indicating a transmission mode with a destination not identified in advance in this example) or communications (indicating a transmission mode with a destination identified in advance in this example). Thus, the modulation signal may be transmitted by any one of the following including, wireless broadcasting, wired broadcasting, wireless communications, and wired communications.

For example, a broadcasting station (such as broadcasting equipment)/receiving station (such as a television receiver) for terrestrial digital broadcasting is an example of the transmission device PROD_A/reception device PROD B that transmits and receives a modulation signal through wireless broadcasting. A broadcasting station (such as broadcasting equipment)/receiving station (such as a television receiver) for cable television broadcasting is an example of the transmission device PROD_A/reception device PROD_B that transmits and receives a modulation signal through wired broadcasting.

A server (such as a work station)/client (such as a television receiver, a personal computer, or a smartphone) for a Video On Demand (VOD) service and a video sharing serving using the Internet is an example of the transmission device PROD_A/reception device PROD_B that transmits and receives a modulation signal through communications (generally, a wireless or wired transmission medium is used for LANs, and a wired transmission medium is used for WANs). The personal computer includes a desktop PC, a laptop PC, and a tablet PC. The smartphone includes a multifunctional mobile phone terminal.

The client of the video sharing service has a function of decoding the encoded data downloaded from the server and displaying the decoded data on a display and also has a function of encoding a video captured by a camera and uploading the video to the server. Thus, the client of the video sharing service serves as both the transmission device PROD_A and the reception device PROD_B.

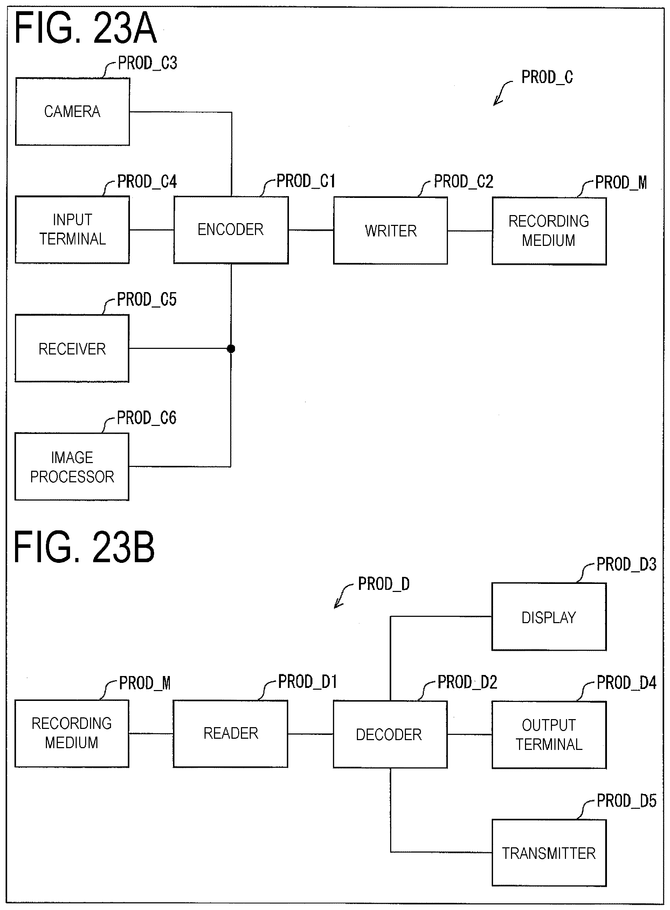

Next, how the image encoding device 11 and the image decoding device 31 described above can be used for recording and playing a video is described with reference to FIGS. 23A and 23B.

FIG. 23A is a block diagram illustrating a configuration of a recording device PROD_C incorporating the above-described image encoding device 11. As illustrated in FIG. 23A, a recording device PROD C includes an encoder PROD_C1 that encodes the video to obtain encoded data, and a writer PROD_C2 that writes the encoded data obtained by the encoder PROD_C1 to a recording medium PROD_M. The image encoding device 11 is used as the encoder PROD_C1.

The recording medium PROD M may be (1) a medium of a type incorporated in the recording device PROD C such as a Hard Disk Drive (HHD) or Solid State Drive (SSD), (2) a medium of a type to be connected to the recording device PROD_C such as an SD memory card or a Universal Serial Bus (USB) flash memory, and (3) a medium that is installed in a driver (not illustrated) incorporated in the recording device PROD_C such as a Digital Versatile Disc (DVD) or a Blu-ray Disc (BD, registered trademark).

The recording device PROD_C may further include a source of the video input to the encoder PROD C1 including: a camera PROD_C3 that captures a video; an input terminal PROD_C4 through which a video is input from the outside; a receiver PROD_C5 for receiving the video; and an image processor C6 that generates or processes an image. FIG. 23A illustrates a configuration where the recording device PROD_C includes all of these components as an example. Note that a part of these components may be omitted.

The receiver PROD_C5 may receive a video that is not encoded, or an encoded data encoded with an encoding scheme for transmission different from an encoding scheme for recording. In the latter case, a transmission decoder (not illustrated) that decodes the encoded data encoded by the encoding scheme for transmission, may be interposed between the receiver PROD_C5 and the encoder PROD_C1.

Examples of the recording device PROD_C include a DVD recorder, a BD recorder, and a Hard Disk Drive (HDD) recorder (in this case, the input terminal PROD_C4 or the receiver PROD_C5 serves as the main supplier of the video). A camcorder (for which the camera PROD_C3 serves as the main supplier of the video), a personal computer (for which the receiver PROD_C5 or the image processor C6 serves as the main supplier of the video), a smartphone (for which the camera PROD_C3 or the receiver PROD_C5 serves as the main supplier of the video), and the like also serve as an example of the recording device PROD_C.

FIG. 23B is a block diagram illustrating a configuration of a reproducing device PROD_D incorporating the above-described image decoding device 31. As illustrated in FIG. 23B, the reproducing device PROD D includes a reader PROD_D1 that reads encoded data written to the recording medium PROD_M, and a decoder PROD_D2 that decodes the encoded data read by the reader PROD_D1 to obtain a video. The image decoding device 31 described above is used as the decoder PROD_D2.

The recording medium PROD_M may be (1) a medium of a type incorporated in the recording device PROD D such as an HHD or an SSD, (2) a medium of a type to be connected to the recording device PROD D such as an SD memory card or a USB flash memory, and (3) a medium that is installed in a driver (not illustrated) incorporated in the recording device PROD C such as a DVD or a BD.

The reproducing device PROD_D may further include, as targets to which the decoder PROD_D2 outputs a video, a display PROD_D3 that displays a video, an output terminal PROD_D4 for outputting the video to the outside, and a transmitter PROD_D5 that transmits the video. FIG. 23B illustrates a configuration where the reproducing device PROD_D includes all of these components as an example. Note that a part of these components may be omitted.

The transmitter PROD_D5 may transmit a video that is not encoded, or an encoded data encoded with an encoding scheme for transmission different from an encoding scheme for recording. In the latter case, an encoder (not illustrated) that encodes the video by the encoding scheme for transmission, may be interposed between the decoder PROD D2 and the transmitter PROD D5.

Examples of such a reproducing device PROD D include a DVD player, a BD player, an HDD player, and the like (in this case, the output terminal PROD_D4 to which a television receiver or the like is connected serves as a main target for supplying the video). A television receiver (for which the display PROD_D3 serves as the main target for supplying a video), a digital signage (also referred to as an electronic signage and electronic bulletin board for which the display PROD_D3 serves as the main target for supplying a video), a desktop PC (for which the output terminal PROD_D4 or the transmitter PROD_D5 serves as the main target for supplying a video), a laptop or tablet PC (for which the display PROD_D3 or the transmitter PROD_D5 serves as the main target for supplying a video), a smartphone (for which the display PROD_D3 or the transmitter PROD_D5 serves as the main target for supplying a video), and the like also serves as an example of the reproducing device PROD D.

(Hardware implementation and software implementation)

The blocks in the image decoding device 31 and the image encoding device 11 described above may be implemented by hardware with a logic circuit formed on an integrated circuit (IC chip), or by software with a Central Processing Unit (CPU).

In the latter case, the devices include a CPU configured to perform commands of a program for achieving the functions, a Read Only Memory (ROM) in which the program is recorded, a Random Access Memory (RAM) onto which the program is loaded, and a storage device (recording medium) in which the program and various types of data are recorded. An object of an aspect of the present invention can be also achieved with a recording medium storing a computer-readable program code (an execution format program, an intermediate code program, a source program) of a control program for the devices that are software implementing the functions described above supplied to the devices and with the computer (or a CPU or an MPU) reading and executing the program code recorded in the recording medium.

Examples of the recording medium may include tapes such as magnet tapes and cassette tapes, disks(discs) including magnet disks such as Floppy (registered trademark) disks and hard disks, and optical discs such as CD-ROMs (Compact Disc Read-Only Memories), MO discs (Magneto-Optical discs), MDs (Mini Discs), DVDs (Digital Versatile Discs), CD-Rs (CD Recordable), Blu-ray Discs (registered trademark), cards such as IC cards (including memory cards) and optical cards, semiconductor memories such as mask ROMs, EPROMs (Erasable Programmable Read-Only Memories), EEPROMs (Electrically Erasable and Programmable Read-Only Memories (registered trademark), and flash ROMs, and logic circuits such as PLDs (Programmable logic devices) and FPGAs (Field Programmable Gate Arrays).

The devices may be configured to be connectible to a communication network, and the program code may be supplied through the communication network. This communication network is not particularly limited as long as the program code can be transmitted therethrough. Examples of the communication network available may include the Internet, an intranet, an extranet, a LAN (Local Area Network), an ISDN (Integrated Services Digital Network), a VAN (Value-Added Network), a CATV (Community Antenna television/Cable Television) communication network, a Virtual Private Network), a telephone line network, a mobile body communication network, and a satellite communication network. A transmission medium that makes up this communication network is not also limited to any particular configuration or type as long as the program code can be transmitted therewith. Examples of the transmission medium available may include wired media including IEEE (Institute of Electrical and Electronic Engineers) 1394, USB, power line carriers, cable TV lines, telephone lines, ADSL (Asymmetric Digital Subscriber Line) lines, and wireless media including infrared such as IrDA (Infrared Data Association) or remote control, Bluetooth (registered trademark), IEEE802.11 wireless, HDR (High Data Rate), NFC (Near Field Communication), DLNA (Digital Living Network Alliance (registered trademark)), cellular phone networks, satellite lines, and terrestrial digital networks. Note that one aspect of the present invention may also be implemented in a form of a computer data signal embedded in a carrier wave in which the program code is embodied by electronic transmission.

One aspect of the present invention is not limited to each of the above-described embodiments. It is possible to make various modifications within the scope of the claims. Furthermore, embodiments that are made by suitably combining technical means disclosed within the scope of the claims are also included in the technical scope of one aspect of the present invention.

Cross-Reference of Related Application

This application claims the benefit of priority to JP 2016-097457 filed on May 13, 2016, which is incorporated herein by reference in its entirety.

Reference Signs List

11 image encoding device
52 ALF unit
315 ALF
511 filter coefficient predictor
512 filter coefficient decoder
513 filter coefficient buffer (filter coefficient storage)
514 category index decoder
515 filter table decoder

516 copy information decoder
521 block categorizer
5211 block parameter deriver
5212 block index deriver
524 filter coefficient setter (filter index deriver)
525 filter processor
528 category deriver


**Claims**

1. An image decoding device that generates an unfiltered decoded image by referring to a residual image and a prediction image and generates a decoded image by applying an in-loop filter to the unfiltered decoded image, the device comprising:

   a block index deriver configured to derive a block index by referring to a pixel value of the unfiltered decoded image in a target unit area;
   a filter index deriver configured to derive a filter index by referring to the block index; and
   a filter processor configured to apply the in-loop filter to the unfiltered decoded image in the target unit area, by using a filter coefficient determined in accordance with the filter index.

2. The image decoding device according to claim 1, wherein the block index deriver derives the block index in accordance with at least one of a maximum value or a minimum value of a luminance value in the unit area in the unfiltered decoded image.

3. The image decoding device according to claim 1 or 2, wherein the block index deriver derives the block index in accordance with an average value of a luminance value in the unit area in the unfiltered decoded image.

4. The image decoding device according to claim 1, wherein the block index deriver derives the block index in accordance with a value, being one of a maximum value and a minimum value of a luminance value of the unit area in the unfiltered decoded image, that is closer to an average value of the luminance value in the unit area in the unfiltered decoded image.

5. The image decoding device according to claim 2, wherein the block index deriver derives the block index by referring to a difference between the maximum value and the minimum value of the luminance value in the unit area in the unfiltered decoded image.

6. The image decoding device according to any one of claims 1 to 5, wherein the block index deriver derives the block index by referring to at least one of directivity or activity in an image in the unit area in the unfiltered decoded image.

7. The image decoding device according to claim 1, wherein the block index deriver derives the block index by referring to,
   in the unfiltered decoded image,
   a sum of pixel value variations in a horizontal direction relative to a target pixel group,
   a sum of pixel value variations in a vertical direction relative to the target pixel group, and
   a pixel value variation in a diagonal direction relative to a target pixel.

8. An image decoding device that generates an unfiltered decoded image by referring to a residual image and a prediction image and generates a decoded image by applying an in-loop filter to the unfiltered decoded image, the device comprising:

   a category index determination unit configured to determine a category index for indicating a deriving method for a block index for each unit area;
   a block index deriver configured to derive the block index in accordance with the deriving method indicated by the category index;
   a filter index deriver configured to derive a filter index by referring to the block index; and
   a filter processor configured to apply the in-loop filter to the unfiltered decoded image in a target unit area by using a filter coefficient determined in accordance with the filter index.

9. The image decoding device according to claim 8, wherein the deriving method for the block index includes a first deriving method of deriving the block index in accordance with activity and directivity of the unfiltered decoded image in the target unit area, and a second deriving method of deriving the block index in accordance with a partial area, obtained by dividing a picture of the unfiltered decoded image, that includes a target pixel.

10. An image decoding device that generates an unfiltered decoded image by referring to a residual image and a prediction image and generates a decoded image by applying an in-loop filter to the unfiltered decoded image, the device comprising:

a category index deriver configured to derive a category index for each unit area;
a filter index deriver configured to derive a filter index by referring to the category index;
a filter processor configured to apply the in-loop filter to the unfiltered decoded image in a target unit area by using a filter coefficient determined in accordance with the filter index; and
a filter coefficient storage configured to store the filter coefficient in any of a plurality of buffers in accordance with the category index.

11. An image encoding device that generates an unfiltered decoded image by referring to a prediction image and a prediction residual and generates a decoded image by applying an in-loop filter to the unfiltered decoded image, the device comprising:

a block index deriver configured to derive a block index by referring to a pixel value of the unfiltered decoded image in a target unit area;
a filter index deriver configured to derive a filter index by referring to the block index; and
a filter processor configured to apply the in-loop filter to the unfiltered decoded image in the target unit area by using a filter coefficient determined in accordance with the filter index.

12. An image encoding device that generates an unfiltered decoded image by referring to a prediction image and a prediction residual and generates a decoded image by applying an in-loop filter to the unfiltered decoded image, the device comprising:

a category index determination unit configured to determine a category index for indicating a deriving method for a block index for each unit area;
a block index deriver configured to derive the block index in accordance with the deriving method indicated by the category index;
a filter index deriver configured to derive a filter index by referring to the block index; and
a filter processor configured to apply the in-loop filter to the unfiltered decoded image in a target unit area by using a filter coefficient determined in accordance with the filter index.

13. An image encoding device that generates an unfiltered decoded image by referring to a prediction image and a prediction residual and generates a decoded image by applying an in-loop filter to the unfiltered decoded image, the device comprising:

a category index deriver configured to derive a category index for each unit area;
a filter index deriver configured to derive a filter index by referring to the category index;
a filter processor configured to apply the in-loop filter to the unfiltered decoded image in a target unit area by using a filter coefficient determined in accordance with the filter index; and
a filter coefficient storage configured to store a filter coefficient in any of a plurality of buffers in accordance with the category index.

# FIG. 1

# FIG. 2A
SEQUENCE LAYER

| VPS | SPS#0 | SPS#1 | PPS#0 | PPS#1 | SEI | PICT #0 | PICT #1 |
|-----|-------|-------|-------|-------|-----|---------|---------|

# FIG. 2B
PICTURE LAYER

| SLICE 0 | SLICE 1 | - - - - - - - - - - | SLICE NS-1 |
|---------|---------|---------------------|------------|

# FIG. 2C
SLICE LAYER

| SLICE HEADER | SLICE DATA |
|--------------|------------|

# FIG. 2D
SLICE DATA LAYER

| CODING TREE UNIT (CTU) | CTU | CTU | CTU | CTU | CTU | CTU | CTU | CTU |
|------------------------|-----|-----|-----|-----|-----|-----|-----|-----|

# FIG. 2E
CODING TREE LAYER

# FIG. 2F
CODING UNIT LAYER

| CUH | PU#0 | PU#1 | PU#2 | PU#3 | TU#0 | TU#1 | TU#2 | TU#3 |
|-----|------|------|------|------|------|------|------|------|

# FIG. 3A

2Nx2N

| 0 |
|---|

# FIG. 3B

2NxN

| 0 |
|---|
| 1 |

# FIG. 3C

2NxnU

| 0 |
|---|
| 1 |

# FIG. 3D

2NxnD

| 0 |
|---|
| 1 |

# FIG. 3E

Nx2N

| 0 | 1 |
|---|---|

# FIG. 3F

nLx2N

| 0 | 1 |
|---|---|

# FIG. 3G

nRx2N

| 0 | 1 |
|---|---|

# FIG. 3H

NxN

| 0 | 1 |
|---|---|
| 2 | 3 |

refIdxLX

↓

| P1 | P2 | P3 | P4 | P5 |
|----|----|----|----|----|

601

# FIG. 4

P1

TARGET PICTURE

P2

P3

→ TIME

# FIG. 5

FIG. 6

EP 3 457 690 A1

FIG. 7

FIG. 8

START

DERIVE BLOCK PARAMETER OF
ALF-UNPERFORMED DECODED IMAGE
recPicture OF TARGET UNIT AREA — S0

DERIVE BLOCK INDEX blockIdx OF
TARGET UNIT AREA — S1

DERIVE FILTER INDEX fltIdx
CORRESPONDING TO BLOCK INDEX blockIdx — S2

SUPPLY FILTER COEFFICIENT
alf_filt_coeff[fltIdx][] CORRESPONDING TO
FILTER INDEX fltIdx TO FILTER
PROCESSOR 525 — S3

APPLY FILTER PROCESSING USING FILTER
COEFFICIENT alf_filt_coeff[fltIdx][] TO EACH
PIXEL OF TARGET UNIT AREA — S4

END

# FIG. 9

R2(i, j)    R4(i+M-1, j)

$g_{d1}$

$g_{d2}$

R3(i, j+M-1)    R1(i+M-1, j+M-1)

# FIG. 10

R2(i-1, j-1)    M    R4(i+M, j-1)

$g_{d1}$    $g_{d2}$    M

R3(i-1, j+M)    R1(i+M, j+M)

# FIG. 11

FIG. 12

EP 3 457 690 A1

FIG. 13

FIG. 14

ALF 315C

ALF INFORMATION DECODER 51C

FILTER COEFFICIENT DECODER 512

FILTER TABLE DECODER 515

CATEGORY INDEX DECODER 514

ALFP

alf_filt_coeff[][]

filtIdxTable[][]

category_idx

ALF UNIT 52C

BLOCK CATEGORIZER 521

BLOCK PARAMETER DERIVER 5211

BLOCK INDEX DERIVER 5212

FILTER COEFFICIENT SETTER 524

FILTER PROCESSOR 525

recPicture

blockIdx

alf_filt_coeff[fltIdx][]

alfPicture

START

DECODE CATEGORY INDEX category_idx OF TARGET UNIT AREA ⌐ S11

category_idx==0? ⌐ S12

NO

YES

DERIVE BLOCK INDEX blockIdx CORRESPONDING TO DIRECTION AND ACTIVITY OF TARGET UNIT AREA ⌐ S13

DERIVE BLOCK INDEX blockIdx CORRESPONDING TO POSITION OF TARGET PIXEL IN TARGET UNIT AREA ⌐ S14

DERIVE FILTER INDEX fltIdx CORRESPONDING TO CATEGORY INDEX category_idx AND BLOCK INDEX blockIdx ⌐ S15

SUPPLY FILTER COEFFICIENT alf_filt_coeff[fltIdx][] CORRESPONDING TO FILTER INDEX fltIdx TO FILTER PROCESSOR 525 ⌐ S16

END

FIG. 15

FIG. 16

FILTER COEFFICIENT

DISCARD

FIG. 17

FIG. 18

FIG. 19

FIG. 20

FIG. 21

EP 3 457 690 A1

## FIG. 22A

PROD_A4

CAMERA

PROD_A

PROD_A5

RECORDING MEDIUM

PROD_A1

ENCODER

PROD_A2

MODULATOR

PROD_A3

TRANSMITTER

PROD_A6

INPUT TERMINAL

PROD_A7

IMAGE PROCESSOR

## FIG. 22B

PROD_B

PROD_B4

DISPLAY

PROD_B1

RECEIVER

PROD_B2

DEMODULATOR

PROD_B3

DECODER

PROD_B5

RECORDING MEDIUM

PROD_B6

OUTPUT TERMINAL

# FIG. 23A

PROD_C3

CAMERA

PROD_C4

INPUT
TERMINAL

PROD_C5

RECEIVER

PROD_C6

IMAGE
PROCESSOR

PROD_C1

ENCODER

PROD_C2

WRITER

PROD_M

RECORDING
MEDIUM

PROD_C

# FIG. 23B

PROD_D

PROD_D3

DISPLAY

PROD_M

RECORDING
MEDIUM

PROD_D1

READER

PROD_D2

DECODER

PROD_D4

OUTPUT
TERMINAL

PROD_D5

TRANSMITTER

## INTERNATIONAL SEARCH REPORT

International application No.

PCT/JP2017/015414

| A. CLASSIFICATION OF SUBJECT MATTER |
|---|
| *H04N19/117*(2014.01)i, *H04N19/14*(2014.01)i, *H04N19/176*(2014.01)i, *H04N19/196*(2014.01)i, *H04N19/423*(2014.01)i, *H04N19/70*(2014.01)i, *H04N19/82*(2014.01)i |

According to International Patent Classification (IPC) or to both national classification and IPC

## B. FIELDS SEARCHED

Minimum documentation searched (classification system followed by classification symbols)
H04N19/00-19/98

Documentation searched other than minimum documentation to the extent that such documents are included in the fields searched

| Jitsuyo Shinan Koho | 1922-1996 | Jitsuyo Shinan Toroku Koho | 1996-2017 |
|---|---|---|---|
| Kokai Jitsuyo Shinan Koho | 1971-2017 | Toroku Jitsuyo Shinan Koho | 1994-2017 |

Electronic data base consulted during the international search (name of data base and, where practicable, search terms used)
IEEE Xplore

## C. DOCUMENTS CONSIDERED TO BE RELEVANT

| Category* | Citation of document, with indication, where appropriate, of the relevant passages | Relevant to claim No. |
|---|---|---|
| X | JP 2014-197722 A (Sharp Corp.), | 1,3,6,8-9, |
|  | 16 October 2014 (16.10.2014), | 11-12 |
| Y | paragraphs [0034] to [0035], [0097] to [0098], | 2,5,7,10,13 |
| A | [0104] to [0107], [0123], [0133], [0137], | 4 |
|  | [0139], [0141] to [0159], [0163], [0175] to |  |
|  | [0179], [0194] to [0195], [0207]; fig. 1, 3, 15, |  |
|  | 17, 23 to 24 |  |
|  | & WO 2013/018737 A1 |  |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 June 2017 (26.06.17) | 04 July 2017 (04.07.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2017/015414

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-522956 A (Thomson Licensing),<br>13 June 2013 (13.06.2013),<br>paragraphs [0008], [0048], [0058] to [0059],<br>[0061]<br>& US 2012/0320973 A1<br>paragraphs [0008], [0055], [0065] to [0066],<br>[0068]<br>& WO 2011/112237 A1 & EP 2545711 A1<br>& CN 102792690 A & KR 10-2013-0030254 A | 2,5 |
| Y | Marta Karczewicz, Improvements on adaptive loop<br>filter, Joint Video Exploration Team (JVET) of<br>ITU-T SG 16 WP 3 and ISO/IEC JTC 1/SC 29/WG 11<br>2nd Meeting: San Diego, USA, 20-26 February<br>2016, JVET-B0060.docx, 2016.02.20 | 7 |
| Y | JP 2011-223337 A (Sony Corp.),<br>04 November 2011 (04.11.2011),<br>paragraphs [0302] to [0309]; fig. 30<br>& US 2013/0028321 A1<br>paragraphs [0327] to [0334]; fig. 30<br>& WO 2011/125866 A1 & CN 102884791 A | 10,13 |
| A | JP 2013-187868 A (Sharp Corp.),<br>19 September 2013 (19.09.2013),<br>paragraphs [0047], [0136] to [0154]<br>(Family: none) | 1-13 |
| A | WO 2012/137890 A1 (Sharp Corp.),<br>11 October 2012 (11.10.2012),<br>paragraphs [0170] to [0247]<br>(Family: none) | 1-13 |
| A | Benjamin Bross, et al., WD5: Working Draft 5 of<br>High-Efficiency Video Coding, Joint<br>Collaborative Team on Video Coding (JCT-VC) of<br>ITU-T SG16 WP3 and ISO/IEC JTC1/SC29/WG11 7th<br>Meeting: Geneva, CH, 21-30 November, 2011,<br>JCTVC-G1103_d9.doc, 2012.02.01, pp.1,163-171 | 1-13 |
| A | WO 2013/030902 A1 (Toshiba Corp.),<br>07 March 2013 (07.03.2013),<br>paragraphs [0025] to [0026], [0031], [0072]<br>(Family: none) | 1-13 |
| A | WO 2012/049876 A1 (Toshiba Corp.),<br>19 April 2012 (19.04.2012),<br>paragraphs [0031] to [0038]<br>(Family: none) | 1-13 |
| A | WO 2013/105457 A1 (Sony Corp.),<br>18 July 2013 (18.07.2013),<br>paragraphs [0165] to [0174]; fig. 6<br>(Family: none) | 1-13 |

Form PCT/ISA/210 (continuation of second sheet) (January 2015)

**INTERNATIONAL SEARCH REPORT**

| International application No. |
| --- |
| PCT/JP2017/015414 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2013/105458 A1  (Sony Corp.),<br>18 July 2013 (18.07.2013),<br>paragraphs [0160] to [0173]; fig. 6<br>(Family: none) | 1–13 |

Form PCT/ISA/210 (continuation of second sheet) (January 2015)

# INTERNATIONAL SEARCH REPORT

International application No.

PCT/JP2017/015414

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
        (Continued to extra sheet.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2017/015414 |

Continuation of Box No.III of continuation of first sheet(2)

With respect to claims 8-9 and 12:

The invention as in claim 1 and the invention as in claim 8 have a common technical feature, namely "an image decoding device which generates a pre-filtering decoded image with reference to a residual image and a predicted image, and generates a decoded image by applying an in-loop filter to the pre-filtering decoded image, characterized in being provided with:", "a block index deriving unit which derives a block index", "a filter index deriving unit which derives a filter index with reference to the block index", and "a filter processing unit which applies the in-loop filter to the pre-filtering decoded image in a target unit region, using a filter coefficient determined in accordance with the filter index".

However, the above-said technical feature cannot be considered to be a special technical feature, since the technical feature does not make a contribution over the prior art in the light of the contents disclosed in the document 1 (JP 2014-197722 A (Sharp Corp.), 16 October 2014 (16.10.2014), paragraphs [0034] to [0035], [0097] to [0098], [0104] to [0107], [0123], [0133], [0137], [0139], [0141] to [0159], [0163], [0175] to [0179], [0194] to [0195], [0207]; fig. 1, 3, 15, 17, 23 to 24).

Further, there is no other same or corresponding special technical feature between these inventions.

In addition, similar point also exists between the invention of claim 1 and the invention of claim 12.

Further, similar point also exists between the invention of claim 1 and the invention of claim 9 referring to claim 8.

With respect to claims 10 and 13:

The invention as in claims 1 and 8 and the invention as in claim 10 have a common technical feature, namely "an image decoding device which generates a pre-filtering decoded image with reference to a residual image and a predicted image, and generates a decoded image by applying an in-loop filter to the pre-filtering decoded image, characterized in being provided with:" "an index deriving unit" "which derives an index", "a filter index deriving unit which derives a filter index with reference to the index", and "a filter processing unit which applies the in-loop filter to the pre-filtering decoded image in a target unit region, using a filter coefficient determined in accordance with the filter index".

However, the above-said technical feature cannot be considered to be a special technical feature, since the technical feature does not make a contribution over the prior art in the light of the contents disclosed in the document 1 (JP 2014-197722 A (Sharp Corp.), 16 October 2014 (16.10.2014), paragraphs [0034] to [0035], [0097] to [0098], [0104] to [0107], [0123], [0133], [0137], [0139], [0141] to [0159], [0163], [0175] to [0179], [0194] to [0195], [0207]; fig. 1, 3, 15, 17, 23 to 24).

Further, there is no other same or corresponding special technical feature between these inventions.

In addition, similar point also exists between the inventions of claims 1, 8 and the invention of claim 13.

Accordingly, the following three inventions (invention groups) are involved in claims.

(Invention 1) the inventions of claims 1-7, and 11

An image decoding device which derives a block index with reference to a pre-filtering decoded image in a target unit region, derives a filter index with reference to the block index, and applies the in-loop filter to the pre-filtering decoded image in the target unit region, using a filter coefficient determined in accordance with the filter index.

(Continued to next extra sheet)

**INTERNATIONAL SEARCH REPORT**

International application No.

PCT/JP2017/015414

(Invention 2) the inventions of claims 8-9 and 12
An image decoding device which sets a category index indicating a method for deriving a block index for each unit region, derives a block index in accordance with the derivation method indicated by the category index, derives a filter index with reference to the block index, and applies the in-loop filter to the pre-filtering decoded image in a target unit region, using a filter coefficient determined in accordance with the filter index.

(Invention 3) the inventions of claims 10 and 13
An image decoding device which derives category index for each unit region, derives a filter index with reference to the category index, applies the in-loop filter to the pre-filtering decoded image in a target unit region, using a filter coefficient determined in accordance with the filter index, and stores the filter coefficient in any of a plurality of buffers in accordance with the category index.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016097457 A

**Non-patent literature cited in the description**

- Algorithm Description of Joint Exploration TestModel 1 (JEM 1). *INTERNATIONAL ORGANIZATION FOR STANDARDIZATION ORGANISATION INTERNATIONALE DE NORMALISATION ISO/IEC JTC1/SC29/WG11 CODING OF MOVING PICTURES AND AUDIO, ISO/IEC JTC1/SC29/WG11/N15790,* October 2015

- Algorithm Description of Joint Exploration TestModel 2. *Joint Video Exploration Team (JVET) of ITU-T SG16 WP3 and ISO/IEC JTC1/SC29/WG,* 11 February 2016
- Improvements on adaptive loop filter. *Joint Video Exploration Team (JVET) of ITU-T SG16 WP3 and ISO/IEC JTC1/SC29/WG,* 11 February 2016